# EUROPEAN PATENT SPECIFICATION

(11) **EP 3 777 084 B1**
(45) Date of publication and mention of the grant of the patent: **10.07.2024**
(21) Application number: 19720701.2
(22) Date of filing: 03.04.2019
(51) Int. Cl.: H04W 12/06, H04L 9/40

(54) **SECURITY PROCEDURES FOR COMMON API FRAMEWORK IN NEXT GENERATION NETWORKS**
SICHERHEITSVERFAHREN FÜR GEMEINSAMEN API-RAHMEN IN NETZWERKEN DER NÄCHSTEN GENERATION
PROCÉDURES DE SÉCURITÉ POUR CADRE D'API COMMUNE DANS DES RÉSEAUX DE PROCHAINE GÉNÉRATION

(30) Priority: 06.04.2018 IN 201811013212
(43) Date of publication of application: 17.02.2021
(73) Proprietor: NEC Corporation, 108-8001 Tokyo (JP)
(72) Inventor: ITO, Hironori, Tokyo 108-8001 (JP); PRASAD, Anand Raghawa, Tokyo 108-8001 (JP); YOSHIZAWA, Takahito, 69115 Heidelberg (DE); BASKARAN, Sheeba Backia Mary, Perungudi, Chennai 600096 (IN); ARUMUGAM, Sivabalan, Perungudi, Chennai 600096 (IN); LAKSHMINARAYANAN, Sivakamy, Perungudi, Chennai 600096 (IN)
(74) Representative: MacDougall, Alan John Shaw
(86) International application number: PCT/JP2019/014864
(87) International publication number: WO 2019/194242

(56) References cited:
- US-A1- 2010 281 249
- NEC: "Issues of functionalities in the CAPIF TS 23.222", vol. SA WG6, no. Reno, Nevada, USA; 20171127 - 20171201, 20 November 2017 (2017-11-20), XP051381535, Retrieved from the Internet <URL:http://www.3gpp.org/ftp/tsg%5Fsa/WG6%5FMissionCritical/TSGS6%5F020%5FReno/Docs/> [retrieved on 20171120]
- NEC: "Pseudo-CR on CAPIF authentication related requirements and procedures", vol. SA WG6, no. Reno, Nevada, USA; 20171127 - 20171201, 20 November 2017 (2017-11-20), XP051381536, Retrieved from the Internet <URL:http://www.3gpp.org/ftp/tsg%5Fsa/WG6%5FMissionCritical/TSGS6%5F020%5FReno/Docs/> [retrieved on 20171120]
- MOTOROLA SOLUTIONS: "Pseudo-CR on API invoker authentication", vol. SA WG6, no. Sophia Antipolis, France; 20170904 - 20170907, 12 September 2017 (2017-09-12), XP051336515, Retrieved from the Internet <URL:http://www.3gpp.org/ftp/tsg_sa/WG6_MissionCritical/Ad-hoc_meetings/2017-09-04_CAPIF_and_FRMCS_adhoc/Docs/> [retrieved on 20170912]
- NEC: "Pseudo-CR on missing functionalities in CAPIF - offboarding", vol. SA WG6, no. Reno, Nevada, USA; 20171127 - 20171201, 20 November 2017 (2017-11-20), XP051381539, Retrieved from the Internet <URL:http://www.3gpp.org/ftp/tsg%5Fsa/WG6%5FMissionCritical/TSGS6%5F020%5FReno/Docs/> [retrieved on 20171120]
- LG ELECTRONICS: "Miscellaneous corrections to procedures and information flows", vol. SA WG6, no. Gothenburg, Sweden; 20180122 - 20180126, 15 January 2018 (2018-01-15), XP051391424, Retrieved from the Internet <URL:http://www.3gpp.org/ftp/tsg%5Fsa/WG6%5FMissionCritical/TSGS6%5F021%5FGothenburg/docs/> [retrieved on 20180115]

## Description

### [Technical Field]

The present invention relates to a communication system. The invention has particular but not exclusive relevance to wireless communication systems and devices thereof operating according to the 3rd Generation Partnership Project (3GPP) standards or equivalents or derivatives thereof. The invention has particular although not exclusive relevance to security procedures in the so-called '5G' (or 'Next Generation') systems.

### [Background Art]

In the past, multiple working groups (WGs) in 3GPP have defined different solutions to support northbound API interface external to 3GPP system. Those specifications were triggered by specific needs without coordination with one another. This led to the multiple incompatible API definitions addressing specific needs. Most recently, 3GPP SA2 is defining northbound API to allow external entities to access services provided by the 3GPP system via Service Capability Exposing Function (SCEF). 3GPP is defining the API for SCEF due to the request by an external SDO such as oneM2M.

Up to this point, 3GPP has not defined a common framework to provide access to the services provided by the 3GPP system to the external entities via API. The SCEF in LTE and the NEF in 5G are two examples that can utilize such common framework.

To address this situation, in Release 15, 3GPP SA6 WG specified a stage 2 specification (TS 23.222 [2]) to define the common API framework (CAPIF) architecture which can be used by any future API definitions in 3GPP. This stage-2 Technical Specification (TS) defines the architecture of how the 3rd party API provider can provide its service to the user. The Study done prior to this normative work is summarized in 3GPP Technical Report (TR) 23.722 [1] and it was used as the base for the following normative specification TS 23.222 [2]. This stage-2 specification was completed in Dec 2017.

Currently 3GPP SA3 has an ongoing work item (WI) to define the security aspect of CAPIF. The corresponding SA3 TS is 33.122 [3].
3GPP draft S6-171534 discusses issues in the current CAPIF TS 23.222 ver0.1.0 and proposes to modify some procedures and introduce some new procedures.
3GPP draft S6-171535 elaborates on the issues disclosed in S6-171534.
3GPP draft S6A170308 is a pseudo-change request relating to API invoker authentication.
3GPP draft S6-171538 elaborates on the issues disclosed in S6-171534.
3GPP draft S6-180039 is a change request relating to TS 23.222 in respect of presenting alternative procedures and information flows.

### [Summary of Invention]

The present invention is set out in the appended independent claims. Optional features are set out in the appended dependent claims.

There are several issues from the security perspective according to the specification in [2] and [3]. They are described as follows:
(i) API invoker Onboarding
   a. The procedure for Onboarding API invoker does not specify security related aspects in the procedures. The onboarding procedure lacks information of the API invoker with respect to its location/zone (trusted/untrusted/trust level).
   b. The CCF assigns an API invoker identifier (ID) to the API invoker following a successful onboarding process, but this identifier is not CCF specific. This may lead to lack of control over the assignment and management of the API invoker ID.
   c. The system lacks binding of onboarding results to subsequent procedures such as discovery of service API, authentication, and authorization of API invokers.
   d. Even though onboarding is stated as a one time onboarding process that enrolls the API invoker as a recognized user of the CAPIF, there is also an offboarding process in the system. Which means that, once an API invoker is offboarded from a CAPIF and if it needs to access the service API controlled by the same CAPIF from which it was previously offboarded, the API invoker need to onboard again with the CAPIF to access the corresponding service API. This brings the scope for more than one onboarding during the lifetime of an API invoker. Moreover providing lifetime validity for an API invoker who does not require it or who will not be reliable can lead to resource underutilization, resource exhaustion, and security issues.
(ii) API invoker Offboarding
   a. The system has only API invoker initiated offboarding. When a malicious API invoker exploits the access to service APIs, there is no way to curb such activity.
   b. Lack of CAPIF core function initiated API invoker offboarding to protect against malicious API invoker activities. Although previous document in [6] and [7] discuss the offboarding procedure initiated by the CAPIF core function, they do not discuss security aspect.
   c. Moreover in API invoker initiated offboarding process, there is no mechanism defined to validate the authenticity of offboarding invocation triggered by an API invoker.
(iii) Publish service APIs
   a. The CAPIF supports publishing service APIs by the API provider. Attackers publishing Service APIs by impersonating a legitimate service API provider can lead to malicious service.
   b. The service API publishing procedure does not provide clarity about the API provider and service API related authorization information. The authorization information binding with other aspects to improve security is not discussed.
   c. The service API procedures do not include the publishing period assignment for the service APIs, which can lead to ineffective service API management.
(iv) Unpublish service APIs
   a. The CAPIF supports unpublishing service APIs by the API provider. Once the service API information is unpublished, it can no longer be discovered by API invokers. Therefore, any illegitimate act to unpublish a service API will lead to unavailability of service API.
   b. There is no clear information on what exactly will be contained in authentication and authorization information used in the Unpublish service API procedure.
(v) Update service APIs
   a. The CAPIF supports updating of published Service APIs by the corresponding API publishing functions. But there is no clear information on how exactly an API publishing functions is authenticated or authorized by the CAPIF Core Function to perform the updates to the previously published Service APIs.
   b. There is also no clear information on what exactly will be contained in authentication and authorization information used in the update service API procedure discussed in TS 23.222 [2], clause 8.6.
(vi) Service APIs Discovery
   a. The service API discovery procedure in CAPIF does not define any security requirements.
   b. There is no clear demarcation between the discovery level defined or decided for different API invokers located in different trust zones or based on API invoker's trust levels.
   c. Any API invoker with malicious intent can cause network security issue and so the service topology need to be hidden from the API invoker discovering and accessing the service APIs outside the trust domain of the service API based on the trust level.
   d. There is no binding between the API service discovery by API invoker and the topology hiding by the AEF and CCF. The lack of service API discovery results and topology hiding decision binding can lead to ineffective topology hiding.
(vii) API invoker obtaining authorization from CAPIF core function (CCF) to access service API
   a. The lack of binding between the CAPIF authentication and the Service API authorization Request between an API invoker and the CCF can lead to man-in-the-middle attack by any attacker obtaining the invocation/access token destined for a legitimate API invoker.
   b. The invocation/access token can be exploited to allow for session fixation, wherein a hacker uses a real user's invocation/access token to gain access to the user's account. The lack of AEF ID, CAPIF ID, Service API related ID binding to the generation of the invocation/access token can lead to API invoker authorization verification issues at the CCF or AEF when more than one API invokers requests service API with the same invocation/access token.
   c. CAPIF core function or Service API has a vulnerability for DoS attack. With a large number of access attempts, the CAPIF in this condition can be flooded and shut down, to operate properly.
   d. The lack of maintaining and enforcing a control over an API invoker related Authentication/Authorization counter at the CCF or AEF for every API invoker's authorization request or service API access request can lead to DoS attack over the CCF, AEF and service API provider.
   e. Lack of nonce or timestamp based Service API authorization Request/Response procedure can lead to replay attack.
(viii) Authentication between API invoker and API exposing function (AEF) upon the service invocation
   a. The authentication between API invoker and API exposing function for every Service API invocation can be time consuming and can delay the service invocation process.
   b. The invocation/access token or authentication/authorization information received by the API invoker from the CCF/AEF during an initial authentication if used as such or repeatedly for authentication between API invoker and AEF upon the service invocation can lead to replay or masquerading attack.
(ix) Retrieve service APIs
   a. The CAPIF supports updating of published Service APIs by the corresponding API publishing functions. But there is no clear information on how exactly an API publishing functions is authenticated or authorized by the CAPIF Core Function to perform the updates to the previously published Service APIs.
   b. There is also no clear information on what exactly will be contained in authentication and authorization information used in the update service API procedure discussed in TS 23.222 [2], clause 8.5.
(x) CAPIF event subscription
   a. The CAPIF core function enables the subscribing entity (i.e. API invoker, API exposing function, API publishing function, API management function) to subscribe to the CAPIF events such as availability events of service APIs, change in service API information, monitoring service API invocations, API invoker onboarding events, etc.
   b. The CAPIF event subscription procedure does not discuss how exactly the authentication or authorization of API invokers or subscribing entities are carried out to prevent the malicious API invokers or subscribing entities from subscribing to the event notifications. The subscription and notification for the CAPIF events to any malicious entity will lead to adverse effects.
(xi) CAPIF event unsubscription
   a. The CAPIF core function sends event notifications to all the subscribing entity(s) that have subscribed for the event matching the criteria.
   b. The CAPIF event unsubscription procedure does not discuss how exactly the authentication or authorization of API invokers are carried out to prevent the malicious API invokers from unsubscribing the event notifications of legitimate API invokers/ subscribing entities.
(xii) API invoker authorization to access service APIs
   a. The TS 33.122, clause 5.2.2.2 and 5.2.2.3 states that, "After successful establishment of TLS on CAPIF-2e reference point, API exposing function shall obtain API invoker's authorization rights as specified in TS 23.222 [3] from the CAPIF core function.". Whereas the TS 23.222 clause 8.15.2 Information flows has a note which confirms that it is in SA3 scope to develop the security related information flows for this procedure. Therefore, this NID proposes to include the security procedure for AEF to obtain the API invoker's authorization rights in TS33.122.
(xiii) API invoker authentication
   a. The TS 33.122 clause 5.2.2 describes the CAPIF-2e interface authentication and protection using Access token. The procedure as described does not have any binding between the authentication and the access token generation which can lead to security issues such as replay attack. Therefore, the NID proposes the binding of keys derived during CAPIF-1e authentication and access token generation.

The present document describes some exemplary security procedures for CAPIF to solve or at least alleviate one or more security issues, including but not limited to the following: (i) API invoker Onboarding, (ii) API invoker Offboarding, (iii) Service API publishing, (iv) Service API unpublishing, (v) Update service APIs, (vi) Service API discovery, (vii) API invoker obtaining authorization from CAPIF core function (CCF) to access service API, (viii) Authentication between API invoker and API exposing function (AEF) upon the service invocation, (ix) Retrieve service APIs, (x) CAPIF event subscription, (xi) CAPIF event unsubscription, (xii) API invoker authorization to access service APIs, and (xiii) API invoker authentication.

### Solution of Problem

The appended claims define the scope of protection. Any examples and technical descriptions of apparatuses, products and/or methods in the description and/or drawings not covered by the claims are presented not as embodiments of the invention but as background art or examples useful for understanding the invention.

As one aspect of the present disclosure, a device includes:
a transmitter configured to send an Onboard API invoker request message to an application server after authentication using TLS with the application server; and
a receiver configured to receive an Onboard API invoker response message from the application server, the Onboard API invoker response message including an application server related API invoker ID which is assigned by the application server.

As another aspect of the present disclosure, an application server includes:
a receiver configured to receive an Onboard API invoker request message from a device after authentication using TLS with the device; and
a transmitter configured to send an Onboard API invoker response message to the device in response to the Onboard API invoker request message, the Onboard API invoker response message including an application server related API invoker ID which is assigned by the application server.

As another aspect of the present disclosure, an information processing method in a device includes:
sending an Onboard API invoker request message to an application server after authentication using TLS with the application server; and
receiving an Onboard API invoker response message from the application server, the Onboard API invoker response message including an application server related API invoker ID which is assigned by the application server.

As another aspect of the present disclosure, an information processing method in an application server includes:
receiving an Onboard API invoker request message from a device after authentication using TLS with the device; and
sending an Onboard API invoker response message to the device in response to the Onboard API invoker request message, the Onboard API invoker response message including an application server related API invoker ID which is assigned by the application server.

### Brief Description of Drawings

[fig.1] Figure 1 illustrates schematically an exemplary system to which embodiments of the present invention are applicable.
[fig.2]Figure 2 illustrates schematically an exemplary security procedure for onboarding API invoker to the CAPIF.
[fig.3]Figure 3 illustrates schematically an exemplary procedure for API invoker initiated offboarding from the CAPIF.
[fig.4]Figure 4 illustrates schematically an exemplary procedure for CAPIF initiated offboarding from the CAPIF.
[fig.5]Figure 5 illustrates schematically an exemplary security procedure to publish Service APIs.
[fig.6]Figure 6 illustrates schematically an exemplary security procedure to unpublish Service APIs.
[fig.7]Figure 7 illustrates schematically an exemplary security procedure to Update Service APIs.
[fig.8]Figure 8 illustrates schematically an exemplary security procedure to discover Service APIs.
[fig.9]Figure 9 illustrates schematically an exemplary security procedure for the API invoker obtaining authorization for service API access.
[fig.10] Figure 10 illustrates schematically an exemplary security procedure for authentication between the API invoker and the AEF upon the service API invocation.
[fig.11] Figure 11 illustrates schematically an exemplary procedure for derivation of Invocation token*.
[fig.12] Figure 12 illustrates schematically an exemplary security procedure to retrieve Service APIs.
[fig.13] Figure 13 illustrates schematically an exemplary security procedure for CAPIF event subscription.
[fig.14] Figure 14 illustrates schematically an exemplary security procedure for CAPIF event unsubscription.
[fig.15] Figure 15 illustrates schematically an exemplary procedure for API invoker authorization to access service APIs.
[fig.16] Figure 16 schematically illustrates a mobile (cellular or wireless) telecommunication system 1 to which the above embodiments are applicable.
[fig. 17]Figure 17 is a block diagram illustrating the main components of the UE (mobile device 3) shown in Figure 16.
[fig.18] Figure 18 is a block diagram illustrating the main components of an exemplary (R)AN node 5 (base station) shown in Figure 16.
[fig.19] Figure 19 is a block diagram illustrating the main components of a generic core network node (or function), for example, the CPF 8 or the UPF 9 shown in Figure 16 (or the API Invoker 20).

### Description of Embodiment

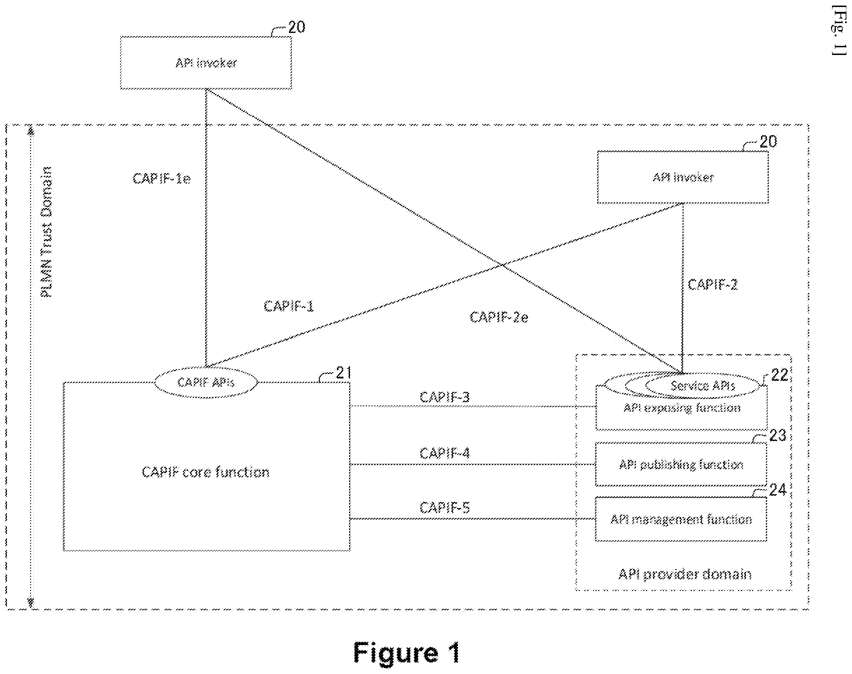

Figure 1 illustrates schematically an exemplary system to which embodiments of the present invention are applicable. The architecture shown in Figure 1 corresponds to the overall CAPIF architecture as described in TS 23.222 [2] subclause 6.2.

In Figure 1, CAPIF-1 through CAPIF-5 refer to the reference points between logical entities:
- CAPIF-1: reference point between the API invoker 20 and the CAPIF Core Function (CCF) 21, where the API invoker 20 is within the PLMN's trust domain.
- CAPIF-1e: reference point between the API invoker 20 and the CAPIF Core Function (CCF) 21, where the API invoker 20 is outside the PLMN's trust domain.
- CAPIF-2: reference point between the API invoker 20 and the API Exposing Function (AEF) 22, where the API invoker 20 is within the PLMN's trust domain.
- CAPIF-2e: reference point between the API invoker 20 and the API Exposing Function (AEF) 22, where the API invoker 20 is outside the PLMN's trust domain.
- CAPIF-3: reference point between the CAPIF Core Function (CCF) 21 and the API Exposing Function (AEF) 22.
- CAPIF-4: reference point between the CAPIF Core Function (CCF) 21 and the API Publishing Function (APF) 23.
- CAPIF-5: reference point between the CAPIF Core Function (CCF) 21 and the API Management Function (AMF) 24.

### 2. Detailed Description

A detailed description of the security procedures corresponding to the problems mentioned above are presented as follows in subsections 2.1 to 2.13 respectively.

To make the description clear, the proposed parameters in this section (including the figures) are shown in bold fonts or underlined in the following CAPIF security procedures. However, the present invention is not limited to the points highlighted in the figures. All the CAPIF security procedures (all the parameters involved in the procedures) stated from section 2.1 to section 2.13 are confidentiality and/or integrity protected by a security context derived from any of the preceding authentication or authorization procedure between the communicating entities in the CAPIF.

### 2.1 Security procedure for API invoker Onboarding

Description in this section corresponds to the procedure described in TS 23.222 [2] subclause 8.1.

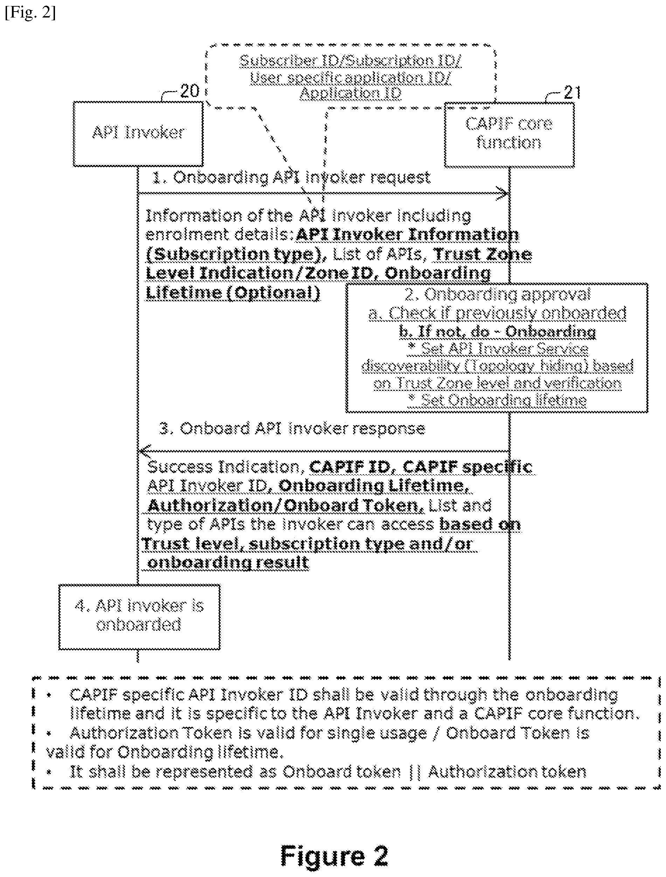

Figure 2 illustrates schematically an exemplary security procedure for onboarding API invoker 20 to the CAPIF.

Authorization and onboard token can be generated using one or more information. The following describes one example of how this token can be generated. However, other generation methods using other type of information are not excluded.

**[Table 1]**

| **Authorization & Onboard token generation** | |
|---|---|
| **Onboard Token** | - API provider ID/CAPIF Specific API Invoker ID∥Onboarding Subscription TypeII Discovery level∥Lifetime∥Secret |
| **Secret** | - A random number provided by the CCF, which is shared with API provider functions and is specific to the service API type and the approved discovery level. |
| **Authorization Token** | - API provider ID/CAPIF specific API Invoker ID∥Onboarding count∥Secret |

Variant for Onboard Token generation: Onboard token generation shall be bound to any combination of the following: API provider ID/CAPIF core function Specific API Invoker ID∥ CAPIF ID∥Onboarded Subscription Typell Discovery level∥ILifetime∥Secret.

Variant for secret or secret random number: Can be any random number generated by the CCF 21 which can be pre-provisioned.

There is an authentication/authorization procedure between the API invoker 20 (Device or subscriber or subscription) and the CAPIF core function 21/network prior to the API invoker onboarding process using TLS or any related authentication mechanism such as EAP-AKA' or 5G AKA or any security method. For example, the security context that is established as a part of the NAS signaling, e.g. UE attach procedure, can be shared with the application layer (i.e. between the API invoker 20 and the CAPIF core function 21) after the mutual authentication between the UE and the network is established. The security context required to secure onboarding procedure is explicitly derived from the security context derived for NAS signaling protection. That security context can be used to derive CAPIF Onboard protection keys to confidentiality and/or integrity protect the Onboarding message exchanges (Parameters or information elements involved in the onboarding process) between the API invoker 20 and the CCF 21.

Variant: The security context required to confidentiality or integrity protect the onboarding message exchanges between the API invoker 20 and the CAPIF core function 21 or parameters discussed in section 2.1-Security procedure for API invoker Onboarding or figure 2 are pre-provisioned to the API invoker 20 by the network.
1. The API invoker 20 sends the Onboarding API invoker request to the CAPIF core function 21 with the API Invoker Information along with the subscription identification information, subscription identifier, subscriber identifier or device identifier, user or device specific application identifier, requested subscription type, its locations Trust Zone Level Indication or zone identifier (Zone ID) and the maximum or minimum Onboarding Lifetime (Optional parameter).
   a. Variant: The Zone ID can be the Access Point Name or the access network related information through which the API invoker 20 is connected to the network.
   b. Variant: According to TS 33.501, Clause 5.7.1 Trust boundaries, "it is assumed for the set of requirements in this sub-clause that mobile network operators subdivide their networks into trust zones. Subnetworks of different operators are assumed to lie in different trust zones". The proposal here is that, every device will have the access point name (APN) or the access network information. So, if the device shares the APN through which it is connected to the network, then the CCF 21 makes use of the received APN information and the Trust value it stored within itself to analyze the trust it can have on a particular API invoker's service API request. To support this the CCF 21 need to store the various zone related information, the information about the APN in the zone and the trust values corresponding to the various zone or the trust values corresponding to the CCF 21/Network and the various trusted Zones.
   c. Variant: The API invoker Information contains a user specific application ID or Subscription/Subscriber ID or third party application ID along with the credentials related to the ID (e.g. password). If the API invoker Information contains a user specific ID which affects the user privacy, then a concealed identifier needs to be sent.
2. The CAPIF core function (CCF) 21 on receiving the API invoker Information verifies if that particular API invoker 20 is previously onboarded or not. If the API invoker 20 is already onboarded to the CCF 21, it ignores the Onboarding API invoker request message. If the API invoker 20 is not previously onboarded, the CCF 21 verifies the received API Invoker's subscription related information and received Zone ID related trust information, the trust level of both API invoker 20 and/or its location/network information or the trust value of access point through which the API invoker connects with the network/ trust value of the zone from which the API invoker connects with the network it has received in Onboarding API invoker request message with its stored information. If the verification is successful and if the API invoker requested an onboarding lifetime, then the CCF 21 assigns an Onboarding lifetime for the API invoker 20 based on the verification results and stores the API provided information and the onboarding results for later usage (To set the API invoker service discoverability). Based on the trust level and onboarding results, a subscription to the onboarding/registration and the level of topology hiding for service API discovery are determined and relevant data is stored at the CCF 21. As the onboarding lifetime parameter requested by the API invoker 20 can be optional, the CCF 21 will determine an onboarding lifetime based on the API invoker Information, trust level of API invoker's residing zone, subscription verification and its policy. The CCF 21 determines the Onboarding lifetime value if it is requested by the API invoker 20.
   a. Variant: In every device we will have the APN information. So, if the device shares the APN through which it is connected to the network, then the CCF 21 makes use of the APN information (Trust value) it stored with itself to analyze the trust it can have on a particular API invoker related aspects.
3. If the API invoker 20 is successfully granted onboarding, then the CCF 21 sends the Onboard API invoker response message with Success Indication, CAPIF ID (CAPIF/CCF related Identifier that can identify uniquely to which CAPIF or CCF 21 does an API invoker 20 got onboarded) , CAPIF specific API Invoker ID (CAPIF core function or CAPIF hosted operator specific API invoker ID), Onboarding Lifetime, Authorization/Onboard Token (To support further authentication/authorization between API invoker 20 and CCF 21/AEF 22) and the Service API Availability notification. The CAPIF specific API Invoker ID is the CCF associated API invoker identifier assigned by the CCF 21 after a successful onboarding process. This CAPIF core function specific API Invoker ID remains the same throughout the onboarding lifetime. The Onboard token is a secret token that is required to be sent by the onboarded API invoker 20 while sending the authentication request as a token of successful onboarding. The onboard token remains the same for the onboarding lifetime. The authorization token given to the API invoker 20 is a dynamic secret which will be updated after every authentication with a CCF 21 during an onboarding lifetime. On a successful onboarding, the applicable or Service API Availability notification parameter contains the list of all service API (names and/or identifiers and/or type) that is discoverable for / invoked by the API invoker 20.
   a. Variant: The Onboard token is used as such or a derivative of it is used between the API invoker 20 and the CCF 21/ AEF 22 as proof or token of authorization for onboarded API invoker 20.
   b. Variant: Both Authorization token and onboard token are sent by the CCF 21 to the API invoker 20 along with the success indication in the Onboard API invoker request message.
4. On a successful onboarding, the API invoker 20 stores the CCF provided service API list that it is liable to invoke/or managed by the CAPIF as the Onboarded Service API List.
   a. Variant: The onboarding results need to be bound to the subsequent CAPIF procedures such as discovery of service API, authentication, and authorization of API invokers.

### 2.1.1 Binding of Onboarding results to the authentication and the authorization procedure.

The TS 33.122 describes the authentication and authorization procedure between the API invoker 20 and the AEF 22 in clause 5.2.2.1 Method 1 - Using TLS-PSK. Where the API invoker 20 and API exposing function 22 establish dedicated secure session using TLS connection based on Pre-Shared Key. After successful establishment of TLS on CAPIF-1e, the API invoker 20 and the CAPIF core function 21 shall derive the key AEF_{PSK}.

Proposal: The AEF_{PSK} can be bounded to the CAPIF core function specific API invoker identity, Onboarding token, CAPIF identity, Authorization Token and the AEF identity

### 2.2 Security procedure for API invoker Offboarding

### a. API invoker 20 initiated Offboarding

Description in this section corresponds to the procedure described in TS 23.222 [2] subclause 8.2.

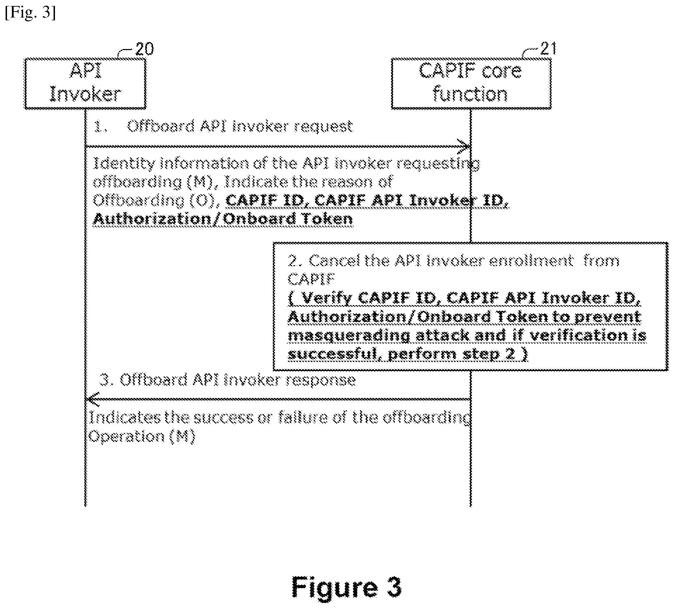

Figure 3 illustrates schematically an exemplary procedure for API invoker 20 initiated offboarding from the CAPIF.
1. The API invoker 20 triggers offboard API invoker request to the CAPIF core function 21, providing the CAPIF ID, CAPIF specific API Invoker ID, Authorization token/Onboard token as required by the CCF 21 for API management
   a. Variant: The Authorization token to authorize offboarding is derived from the onboard token and its derivation is bound to the CAPIF ID and/or CAPIF API Invoker ID and/or Offboard code (Static or dynamic).
   b. Variant: Either Authorization token or onboard token or both is/are sent in an Offboard API invoker request message.
2. The CCF 21 verifies if the requesting API invoker 20 is the genuine one to offboard the claimed onboarded API invoker 20 with CAPIF API Invoker ID. If the verification is successful, the CAPIF core function 21 cancels the enrollment of the API invoker 20 from CAPIF. The API invoker 20 ceases to be a recognized user of the CAPIF. All the authorizations and related information corresponding to the API invoker 20 are deleted from CAPIF. Optionally, the information of API invoker 20 may be retained at the CAPIF core function 21 as per the operator policy.
3. The CAPIF core function 21 returns the offboard API invoker response message, providing successful offboarding indication to the API invoker 20.
   b. CAPIF initiated API Offboarding

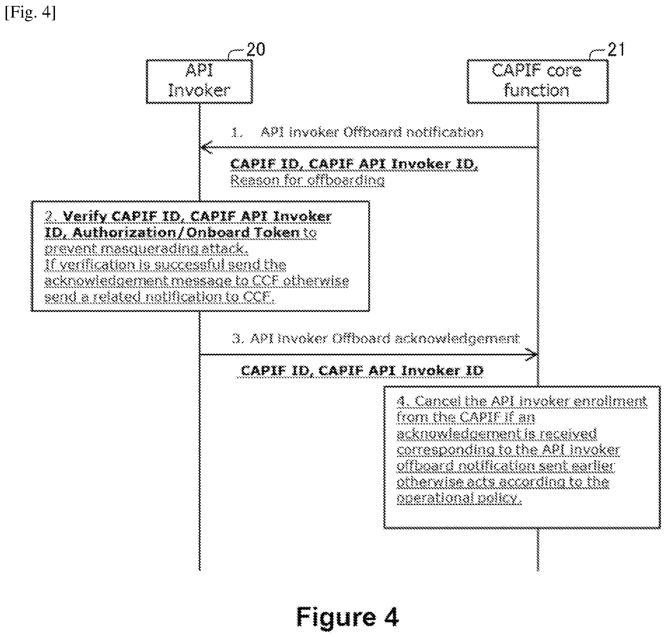

Figure 4 illustrates schematically an exemplary procedure for CAPIF initiated offboarding from the CAPIF.
1. The CCF 21 sends the API invoker Offboard notification message to the API invoker 20. The reason of this action includes situations such as the API invoker management function or CAPIF finding the act of API invoker 20 over service API accesses as unintended or unacceptable or rogue. The API invoker Offboard notification message contains the CAPIF ID, CAPIF specific API Invoker ID/information and the reason for offboarding.
   a. Variant: The CCF 21 sends an authorization token / onboard token itself in the API invoker Offboard notification message to API invoker 20 for CCF 21 authentication/authorization to trigger the offboarding process. The authorization token derivation is bound to the CAPIF ID and/or the onboard token previously shared with the API invoker 20 during the successful onboarding.
   b. Variant: After sending the API invoker Offboard notification message to the API invoker 20 the CCF 21 revokes the service and no longer serves this API invoker's requests.
   c. Variant: If the reason for the offboarding is unintended or unacceptable or rogue action of the API invoker 20, the CCF 21 sends the API invoker Offboard notification message to the API invoker 20 without the authorization token/onboard token and the CCF 21 revokes the service and no longer serve this API invoker's requests.
2. The API invoker 20 after receiving the API invoker Offboard notification message, verifies the CAPIF ID, CAPIF specific API Invoker ID and the received Authorization/Onboard Token with the stored information to prevent masquerading attack.
3. If the verification is successful, the API invoker 20 sends API invoker offboard acknowledgement message to positively acknowledges the offboarding notification to the CCF 21.
4. The CAPIF cancels the API invoker enrollment after receiving the API invoker offboard acknowledgement message from the API invoker 20.

### 2.3 Security procedure for Service API publishing

Description in this section corresponds to the procedure described in TS 23.222 [2] subclause 8.3.

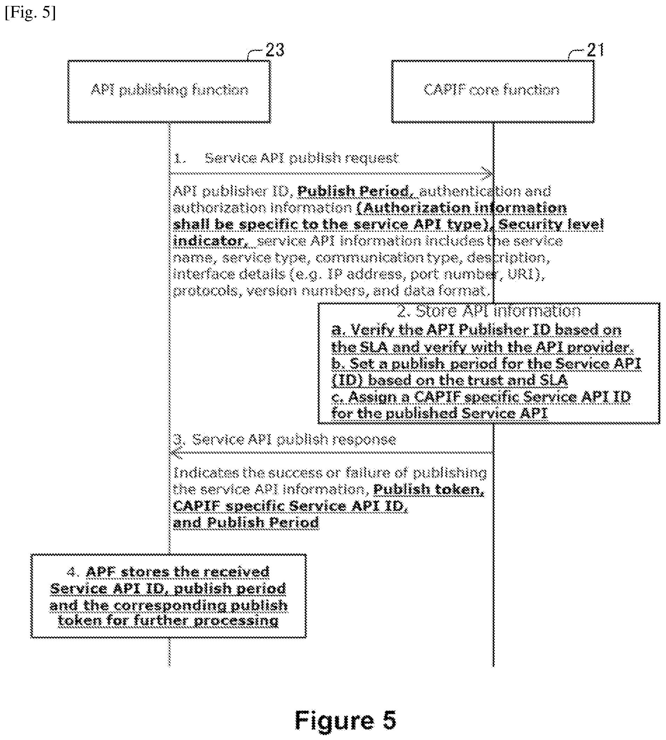

Figure 5 illustrates schematically an exemplary security procedure to publish Service APIs.

On a successful verification of the publisher ID and the SLA, the CCF assigns a unique CAPIF specific Service API Identifier (Service API ID) corresponding to the publishing of requested service API. Moreover Publish token can be generated by the CCF 21 using one or more information as stated below. The following describes one example of how this token can be generated. However, other generation methods using other type of information are not excluded.

**[Table 2]**

| **Publish token generation** |
|---|
| **Publish token** = API provider ID∥API publishing function ID∥Publish Keyword/code∥(Service API Type/name∥Secret |
| **Secret** = |
| Option 1: A random number/secret is selected by CAPIF core function to derive the publish token. |
| Option 2: A random number provided by the API provider or API publisher, which is pre-shared /configured with CAPIF core function and/or is specific to the service API type. |
| Option 3: The secret value in the publish token shall be derived or used as such from the authentication/authorization done previously between the CAPIF core function and the API provider/publisher. |

1. API publishing function (APF) 23 sends the Service API publish request with Publish Period along with other parameters such as API publisher ID/APF ID, authentication and authorization information (if any) specific to the service API type, service API information and an indicator to indicate the level of security required for the Service API to be maintained by the CCF 21 while publishing to the API invokers.
   a. Variant: The security level indicator notified by the APF 23 contains any information related to the security (function/cryptographic algorithm/access level and operation permissions/minimum security required/invoker type/trust level of the API invoker 20/trust level of the API residing zone) of the service APIs and the required conditions to access it.
2. The CCF 21 on receiving the Service API publish request message verifies the authorization information (related to security context (1) pre-shared during an authentication or authorization or (2) pre-configured), API Publisher ID/APF ID based on the SLA and verify with the API provider. The CCF 21 also set a publish period for notified the Service API ID based on the trust, SLA and the requested publish period. After the successful verification, the CCF 21 generates a publish token for the requesting API publishing function 23 and generates/assigns a unique CAPIF specific Service API ID for the published service API. Then the CCF 21 stores the API information along with the publish token, APF ID, Service API ID and the security requirement indicator corresponding to the Service API provided by the APF 23.
   a. Variant: The publish token generation shown above involves any combination of one or more parameters such as API provider ID, APF ID, publishing related keyword, code for publishing (static or dynamic), service API type/name/related information, Secret and CCF ID.
3. If the verification is successful, the CCF 21 sends the Service API publish response message to the APF 23 with success indication, the publish token, Service API ID and the approved publish period.
4. The APF 23 stores the received Service API ID, publish period and the corresponding publish token for further processing such as unpublishing, service API retrieval and updations.
   a. Variant: The publish token received from the CCF 21 is used by the APF 23 as an authorization information to perform service API unpublishing, retrieval and updation operations. In other words, a valid publish token provided by the APF indicates that this APF 23 has been previously authorized.

### 2.4 Security procedure for Service API unpublishing

Description in this section corresponds to the procedure described in TS 23.222 [2] subclause 8.4.

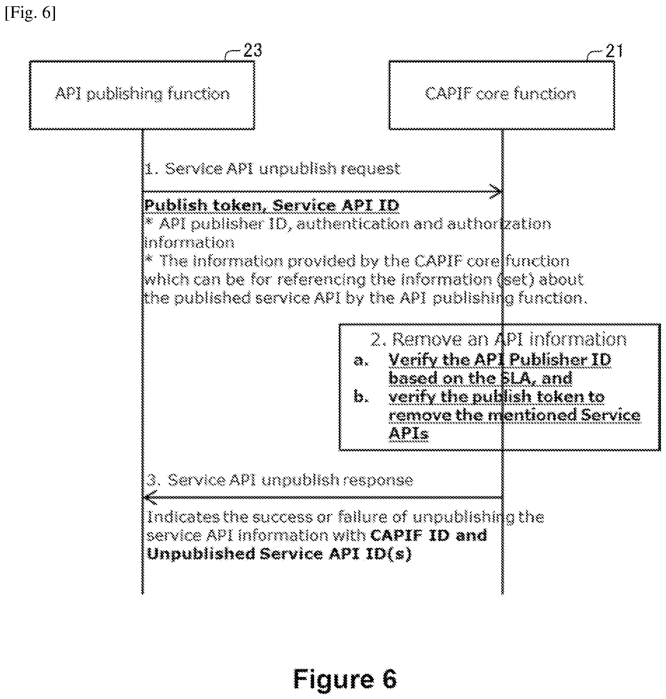

Figure 6 illustrates schematically an exemplary security procedure to unpublish Service APIs.

The generation of the publish token is described in section 2.3. The publish token is used by the APF 23 to unPublish service APIs from the CCF 21.
1. API publishing function (APF) 23 sends the Service API unpublish request message with the publish token (as derived in the section 2.3) and previously published CAPIF specific Service API ID/ Service API related information along with other parameters such as API publisher ID/APF ID, authentication and authorization information.
2. The CCF 21 on receiving the Service API unpublish request message, using the Service API ID, CCF identifies the service API related stored information, then verifies the API Publisher ID based on the SLA and also verifies the publish token as a proof for authorization to request unpublishing of service APIs and if the verification is successful, the CCF 21 removes the mentioned Service APIs from the list of available APIs.
3. If publish token verification is successful, the CCF 21 sends the Service API unpublish response message to the APF 23 with success indication, CAPIF ID, Unpublished Service API IDs and related information as an acknowledgement to the APF 23.
   Variant: Irrespective of this procedure if the service API publish period expires, the CCF 21 unpublishes the published service API.

### 2.5 Security procedure for Service API update

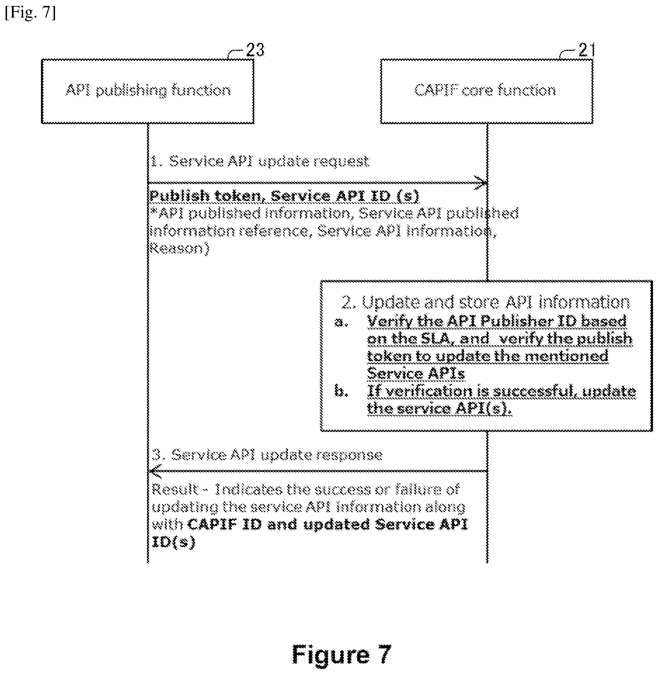

Figure 7 illustrates schematically an exemplary security procedure to Update Service APIs.

Use of publish token to perform Service API Updates by the APF 23 at the CCF 21:

The generation of the publish token is described in section 2.3. The publish token is used by the APF 23 to update service APIs from the CCF 21.
Variant 1: The publish token is pre-shared during the authentication/authorization between the CAPIF core function 21 and the API provider/publisher.
Variant 2: publish token is derived using a key/SECRET derived after a successful authentication between CCF 21 and API publisher to be used as the authentication or authorization information to update the published Service API(s) at the CCF 21 by the APF 23.

Description in this section corresponds to the procedure described in TS 23.222 [2] subclause 8.6.
1. The API publishing function 23 sends a service API update request to the CAPIF core function 21, which includes the API publisher ID, the publish token, Service API ID (type/name/ID) provided by the CCF 21 after a successful publication of the service API.
2. Upon receiving the service API update request, the CAPIF core function 21 checks the publish token and/or Service API ID (type/name/ID) and the API publisher ID to verify whether the API publishing function 23 is authorized to update the published service APIs information. If the check is successful, the service API information provided by the API publishing function 23 is updated at the CAPIF core function 21 (API registry).
3. The CAPIF core function 21 provides a service API update response message to the API publishing function 23 along with the CAPIF ID and the updated Service API ID(s) (type/name/ID) and triggers notifications to subscribed API invokers.

### 2.6 Security procedure for Service API discovery

Description in this section corresponds to the procedure described in TS 23.222 [2] subclause 8.7.

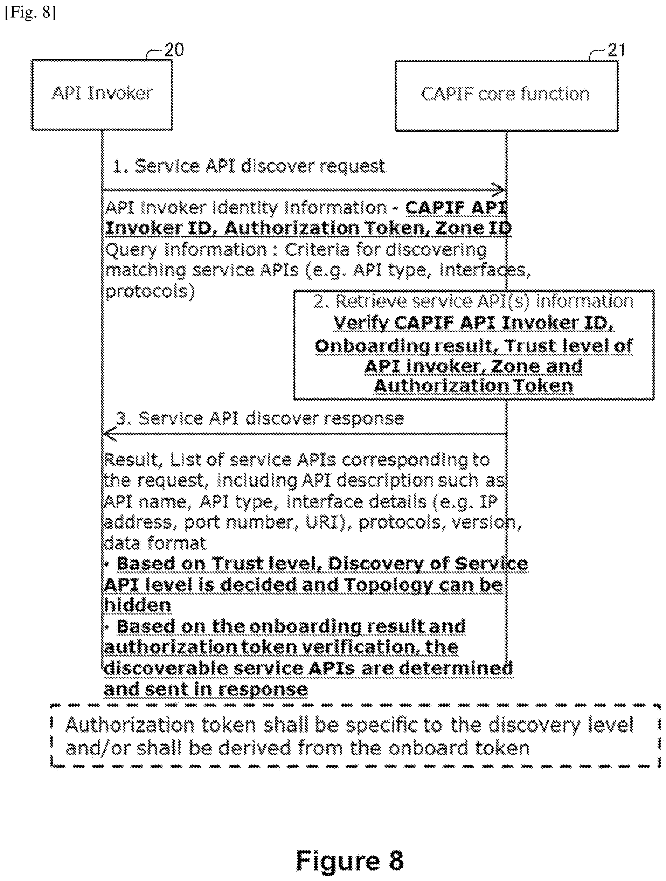

Figure 8 illustrates schematically an exemplary security procedure to discover Service APIs.
1. The API invoker 20 sends the Service API discover request message to the CCF 21 with API invoker identity information (CAPIF API Invoker ID and/or its related credentials), Authorization Token (it is the onboard token itself or a token derived from the Onboard token), Zone id (API invoker's current network or location), and other Query information: Criteria for discovering matching service APIs (e.g. API type, interfaces, protocols).
   a. Variant: The authorization token issued is specific to the discovery level or is derived from the Onboard token.
2. The CCF 21, on receiving the Service API discover request message, verifies the CAPIF specific API Invoker ID, its stored Onboarding result, Trust level of API invoker and Zone/network/location corresponding to the Zone ID from where the API invoker resides and Authorization Token (it is bounded to the onboard token and/or CAPIF API ID and/or CAPIF ID) and if the verification is successful, the CCF 21 retrieves the service API(s) information based on the verification results.
3. If the verification is successful, the CCF 21 sends the Service API discover response message to the API invoker 20 along with Result, Service API information. Based on the verification of the trust level of the API invoker 20 and/or its API invoker Zone, or User/ API invoker/application specific subscription information stored at the CCF 21, the Discovery of Service API level for an API invoker 20 is decided and Topology is hidden accordingly.
   b. Variant: If the API invoker 20 or the device shares the access point name (APN) through which it is connected to the network, then the CCF 21 makes use of the received APN information and the Trust value it stored within itself to analyze the trust it can have on a particular API invoker's service API request. To support this the CCF 21 need to store the various zone related information, the information about the APN in the zone and the trust values corresponding to the various zone or the trust values corresponding to the CCF 21/Network and the various trusted Zones.

### 2.7 Security procedure for API invoker obtaining authorization from CAPIF core function (CCF) to access service API

Description in this section corresponds to the procedure described in TS 23.222 [2] subclause 8.11.

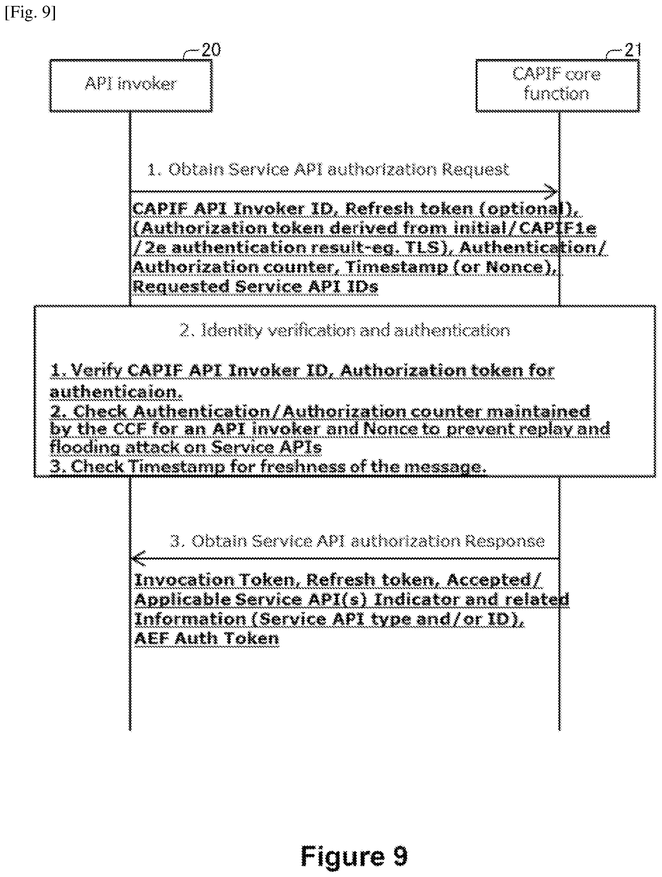

Figure 9 illustrates schematically an exemplary security procedure for the API invoker obtaining authorization for service API access.

Invocation token generation:

**[Table 3]**

| | |
|---|---|
| • | Invocation token shall be a secret bounded to the CAPIF API invoker ID and/or CCF ID and/or AEF ID and/or Service API(s) ID and/or Service API related ID and/or authorization/authentication count |
| • | Invocation token can also be called as an access or authorization token |

Variant: The invocation token is otherwise termed as service API invocation token or Service API access token or API invoker authorization token or Service API authorization token. Either case, the assignment of this token to the API invoker signifies that the API invoker 20 is authorized and given permission to access the service API.
1. The API invoker 20 sends the service API authorization request message to the CAPIF core function 21 for obtaining permission to access the service API by including the API invoker information such as CAPIF specific API Invoker ID, Authorization token derived from the initial/CAPIF 1e/CAPIF 2e authentication (e.g. TLS), Authentication/Authorization counter, Timestamp (or Nonce), Requested Service type/ name/API ID(s) and any related information required for authentication/authorization of the API invoker 20.
   a. Variant: The API invoker 20 also includes the user or user application or API invoker specific subscription information in the service API authorization request message.
2. The CAPIF core function 21 validates the authentication of the API invoker 20 (using authentication information) by verifying the CAPIF API Invoker ID, Authorization token, Authentication/Authorization counter received with the one managed with the CCF 21 and also this can prevent resource exhaustion. Based on the verification results and the user or user application or API invoker specific subscription information received from the API invoker 20, the CCF 21 checks the locally-stored subscription information, the CCF 21 decides whether the API invoker 20 can be authorized to access the requested service type/name/API.
   a. Variant: The CCF 21 may involve additional message exchanges with the API invoker 20 if required during authorization.
3. The authorization information to access the service APIs is sent to the API invoker 20 by the CCF 21 in the service API authorization response message along with service API Invocation Token for subsequent API invoker authentication/authorization with AEF 22, Refresh token to get a new Invocation/Access Token after its lifetime or validity period, Accepted/Applicable Service API(s) Indicator and related Information (Service API type and/or ID/name), and AEF Auth Token to support further mutual authentication between API invoker 20 and the AEF 22.
   a. Variant: The AEF 22 Auth Token is derived by the CCF 21 using a secret (e.g. random value), AEF ID, CAPIF API Invoker ID and any Service API related information.
   b. Variant: The obtain service API authorization response message also contains the validity period of invocation/access token.
   c. Variant: After the expiry of the validity period, the API invoker 20 refreshes the invocation/access token by itself using the incremented authentication/authorization counter. After every successful Service API invocation following an authentication or authorization, the corresponding counter is incremented at both API invoker 20 and CCF 21 side.
   d. Variant: The API invoker 20 can obtain authorization from CCF 21 to access service API based on 1) per user: by sending the user ID or subscription ID or user specific application ID, 2) per API invoker 20: by sending the device ID or device subscription ID or device specific application ID and/or 3) Per Service API level by sending the requested service type/name/ID.

### 2.7.1 Security procedure for API invoker obtaining authorization from CAPIF core function (CCF) to access service API based on Per User / Per API invoker / Per Service API level

### Variant 1: Authorization Per User

The API invoker 20 obtains authorization per user (specific to an application)/subscriber/subscription of a human user from the CCF 21 to request access for service APIs from the related AEF 22.

The security procedure is similar to the one described in the section 2.7.

Additionally, the service API authorization request message sent by the API invoker 20 also contains the user specific identifier/subscriber identification information/subscription identification information. Along with the other verifications described in section 2.7, the CCF 21 also verifies the received user specific identifier/subscriber identification information/subscription identification information to provide the authorization information such as invocation token and refresh token. If the verification is successful, the CCF 21 sends the authorization information such as invocation token and/or refresh token to the API invoker 20

The authorization information until expiry is used by the API invoker 20 for one or any number of authentications with the AEF 22 upon the service invocation.

### Variant 2: Authorization per API invoker 20

API invoker 20 may correspond to a UE or device shared by multiple users as opposed to a specific user. The security procedure is similar to the one described in the section 2.6. In addition to this, the API invoker 20 obtains authorization from the CCF 21 to request access for service APIs from the related AEF 22 by providing its CAPIF specific API Invoker ID and/or the onboard token received after a successful onboarding with the specific CAPIF or CCF in the service API authorization request message.

The CCF 21 verifies the CAPIF specific API Invoker ID and/or the onboard token received from the API invoker 20 to the information it stored with itself to provide the authorization information such as invocation token and refresh token. If the verification is successful, the CCF 21 sends the authorization information such as invocation token and/or refresh token to the API invoker 20.

The authorization information until expiry is used by the authorized API invoker for one or any number of authentications with the AEF 22 upon the same or different service (API) invocation.

Once an API invoker 20 gets authorization from a CCF 21, it is not required for that specific API invoker 20 to perform authorization with the same CCF 21 for any further service invocation with its AEF 22.

### Variant 3: Authorization Per Service API level

The security procedure is similar to the one described in the section 2.6. In addition to this, the API invoker 20 obtains authorization from the CCF 21 to request access for service APIs from the related AEF 22 by providing its CAPIF specific API Invoker ID, Service API ID(s) (type/name/identifier) and/or the onboard token received after a successful onboarding with the specific CAPIF or CCF in the obtain service API authorization request message.

The CCF 21 verifies the CAPIF specific API Invoker ID, Service API ID(s) (type/name/identifier) and/or the onboard token received from the API invoker 20 to the information it stored with itself to provide the authorization information such as invocation token and refresh token. The CCF 21 also verifies if the API invoker 20 is eligible to receive authorization for the requested Service API ID(s) (type/name/identifier). If the verification is successful, the CCF 21 sends the authorization information such as invocation token and/or refresh token to the API invoker 20.

The authorization information until expiry is used by the authorized API invoker 20 for one or any number of authentications with the AEF 22 upon the same or similar (Service API ID(s) (type/name/identifier) service invocation.

For every different service (type/name/identifier), the API invoker 20 obtains authorization from the CAPIF core function (CCF) 21 as described in the security procedure in section 2.6.

### 2.8 Security procedure for Authentication between API invoker and API exposing function (AEF) upon the service invocation

Description in this section corresponds to the procedure described in TS 23.222 [2] sub clause 8.15.

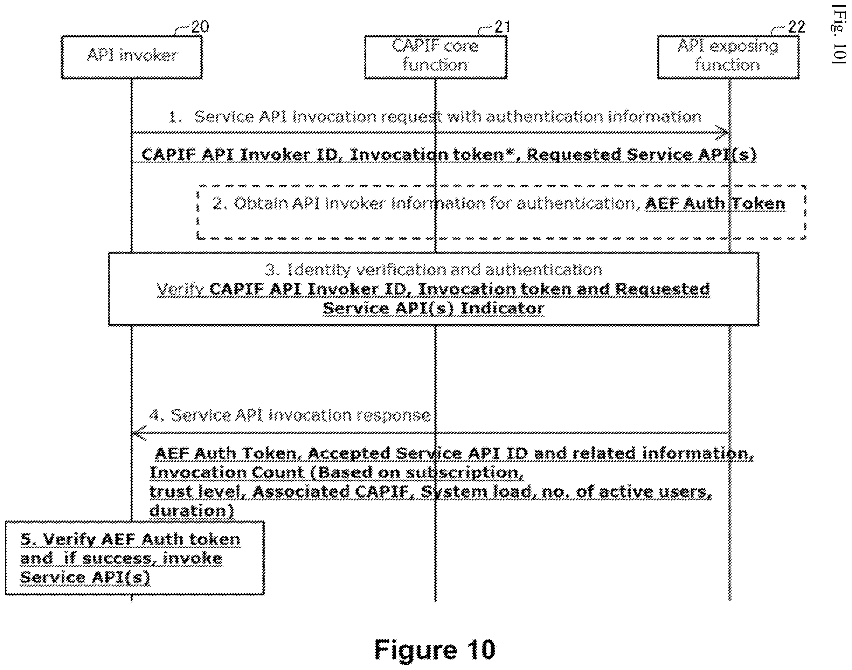

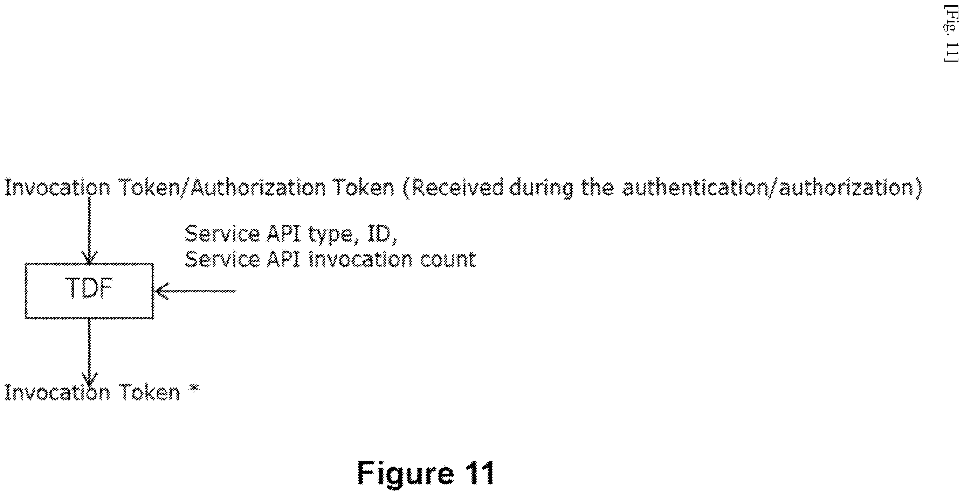

Figure 10 illustrates schematically an exemplary security procedure for authentication between the API invoker 20 and the AEF 22 upon the service API invocation.
1. The API invoker 20 sends the Service API invocation request message with authentication information such as CAPIF API Invoker ID, Invocation token* (derived as shown in Figure 11), Required or Requested Service API(s) ID(s) (Service type/ name/ID) and related information to the API exposing function (AEF) 22. For every new invocation, a new Invocation Token* is computed to avoid security breach due to token reuse.
   a. Variant: Invocation token* is derived using invocation / access / authorization token and/or key resulted in the authentication/authorization between API invoker 20 and CCF 21/ AEF 22 and invocation counter value. Invocation token* can be called as service API Invocation token*.
   b. Variant: The API invoker 20 also sends its subscription related information to the AEF 22 in the Service API invocation request message.
2. The AEF 22 on receiving the Service API invocation request message, it further obtains the API invoker related information such as CAPIF API Invoker ID, authorization information such as Invocation /authorization token or invocation token*, the Requested/Required/Applicable service API(s) related identification (name/type/ID) information, trust level of the API invoker / API invoker's residing zone and the AEF Auth Token from the CCF 21 to perform mutual authentication between API invoker 20 and AEF 22.
   a. Variant: The AEF 22 obtains invocation token or invocation token* from CCF 21 along with other parameters listed in step 2 to perform authentication.
   b. Variant: The invocation token* is derived at API invoker 20 side and either at the CCF 21 or AEF 22 side.
3. The AEF 22 performs the Identity verification and authentication of the API invoker 20 based on the information it obtained from the CCF 21. Also, the AEF 22 verifies the CAPIF API Invoker ID, Invocation token /Invocation token* and the requested Service API(s) Indicator to check if the API invoker 20 with its subscription is liable to access the requested Service API (type / name / ID).
4. If the verification is successful, AEF 22 sends the Service API invocation response message with the AEF Auth Token received from CCF 21 and accepted Service API(s) with its ID and related information, assigned Service API(s) Invocation Count (Based on subscription, trust level of API invoker/its Zone, Associated CAPIF, System load, no. of active users, duration etc.).
5. The API invoker 20 verifies the received AEF Auth token to verify the authenticity/authorization of the AEF 22 and if the verification is successful, the API invoker 20 invokes the accepted Service API(s). This ensures mutual authentication between the API invoker 20 and the AEF 22 upon service invocation.

Figure 11 illustrates schematically an exemplary procedure for derivation of Invocation token*.

Variant: Instead of using invocation Token* as the authorization proof from API invoker 20, the authorization proof can be any secret such as invocation key* or invocation secret*. The API invoker 20, CCF 21 or AEF 22 uses any function such as token derivation function (TDS) for invocation token* generation, key derivation function for invocation key* generation or any function to generate invocation secret* generation respectively.

Variant: Invocation token* or invocation key* or invocation secret*can be derived using any Service API related information, Invocation token/access token received from CCF 21, CAPIF API ID, CAPIF ID, Invocation count specific to the service type/ ID/name. Combination of any one or more of the listed parameters is used in the Invocation Token* or invocation key* or invocation secret* derivation.

### 2.9 Security procedure to Retrieve service APIs

Description in this section corresponds to the procedure described in TS 23.222 [2] subclause 8.5.

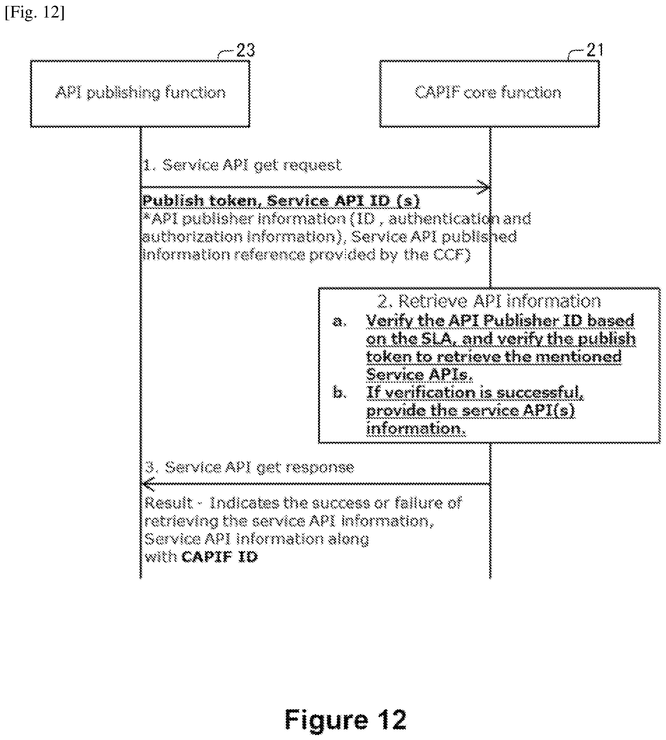

Figure 12 illustrates schematically an exemplary security procedure to retrieve Service APIs.

The generation of the publish token is described in section 2.3. The publish token provided by the CCF 21 during service API publish procedure as described in section 2.3 of the present document is used as the authorization information by the APF 23 to retrieve service APIs from the CCF 21. The security procedure corresponding to the TS 23.222, clause 8.5 is discussed below:
1. The API publishing function 23 sends a service API get request to the CAPIF core function 21, with API publisher information, publish token, service API ID corresponding to the service API published information reference provided by CAPIF core function 21 when the service API was published.
2. Upon receiving the service API get request, the CCF retrieves the API information based on the Service API ID(s) and the CAPIF core function 21 checks whether the API publishing function 23 is authorized to retrieve the published service APIs information. If the check is successful, the corresponding service API information is retrieved from the CAPIF core function 21 (API registry) by the API publishing function 23.
3. The CAPIF core function 21 provides a service API get response to the API publishing function 23 which includes the service API information and the CAPIF ID.

### 2.10 Security procedure for CAPIF event subscription

Description in this section corresponds to the procedure described in TS 23.222 [2] sub clause 8.8.3.

In the following figure, the "subscriber entity" refers to entities that use the service of the CAPIF core function 21. These "subscriber entity" includes entity such as: 1) API invoker 20, 2) API exposing function 22, 3) API publishing function 23, and 4) API management function 24.

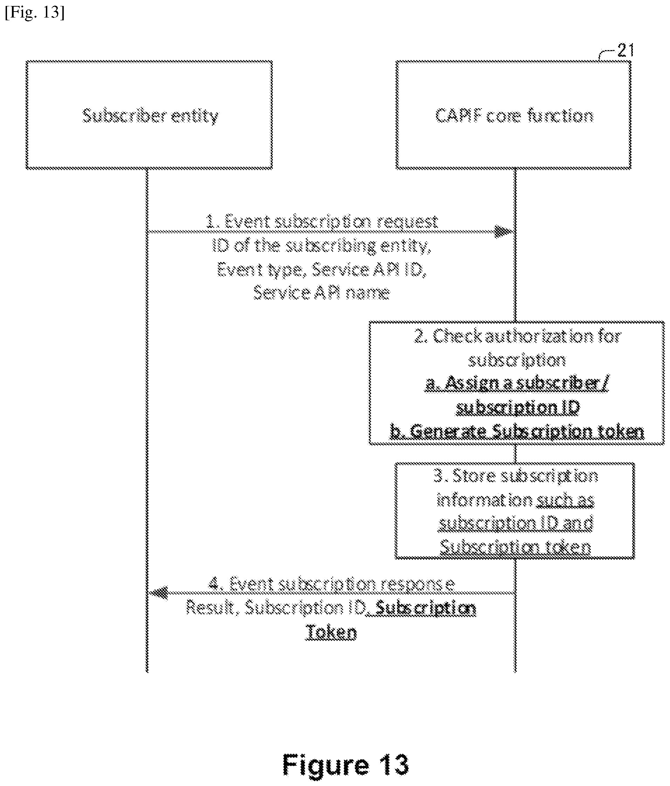

Figure 13 illustrates schematically an exemplary security procedure for CAPIF event subscription.

### Subscription Token/Key Generation:

The subscription Token/Key is derived using any combination of the following one or more parameters:

Onboard token provided by the CCF 21 after a successful onboarding (in case an API invoker 20 is a subscriber entity), Subscriber ID (in case other subscriber entity), Subscription ID, Subscriber entity ID, CAPIF Event ID, CAPIF ID, subscription code/ keyword, Service API type/Name/ID, any pre-shared Secret, any key/token derived using initial authentication/authorization between API invoker 20/Subscriber entity and CCF 21.

### Authorization token generation

If the subscriber entity is an API invoker 20, then the authorization token is derived and shared by the CCF 21 during an onboarding process for the API invoker 20. The method to derive the authorization token for the API invoker 20 is described in section 2.1. If the subscriber entity is any of the other types as described earlier in this section, then the authorization token is derived during a successful registration procedure.

The authorization token is derived using any combination of the following one or more parameters:
- Onboard token provided by the CCF 21 after a successful onboarding ID (API Invokers), CAPIF specific API ID (API Invokers), Subscriber ID of the subscribing entity, CAPIF Event ID, CAPIF ID, subscription code/keyword, Service API type/ Name/ID, any pre-shared Secret, any key/token derived using initial authentication/authorization between API invoker 20/Subscriber entity and CCF 21.

Description in this section corresponds to the procedure described in TS 23.222 [2] sub clause 8.8.3.
1. The subscribing entity sends an event subscription request to the CAPIF core function 21 along with the subscribing entity identifier, authorization token, event type, service API ID, Service API name in order to receive notification of events.
   a. Variant: The subscribing entity can be API invoker 20, API exposing function 22, API publishing function 23 or API management function 24.
   b. Variant: If the subscribing entity is an API invoker 20, the subscribing entity ID is the CAPIF specific API invoker ID.
2. Upon receiving the event subscription request from the subscribing entity, the CAPIF core function 21 checks for the relevant authorization for the event subscription. The CCF 21 validates the authorization token and if the validation/verification is successful, the CC assigns a subscription identifier (ID) and generates a subscription token.
3. If the authorization is successful, the CAPIF core function 21 stores the subscription information such as the subscription ID and the subscription token.
4. The CAPIF core function 21 sends an event subscription response indicating successful operation along with the subscription ID and the subscription token.

### 2.11 Security procedure for CAPIF event unsubscription

Description in this section corresponds to the procedure described in TS 23.222 [2] subclause 8.8.5.

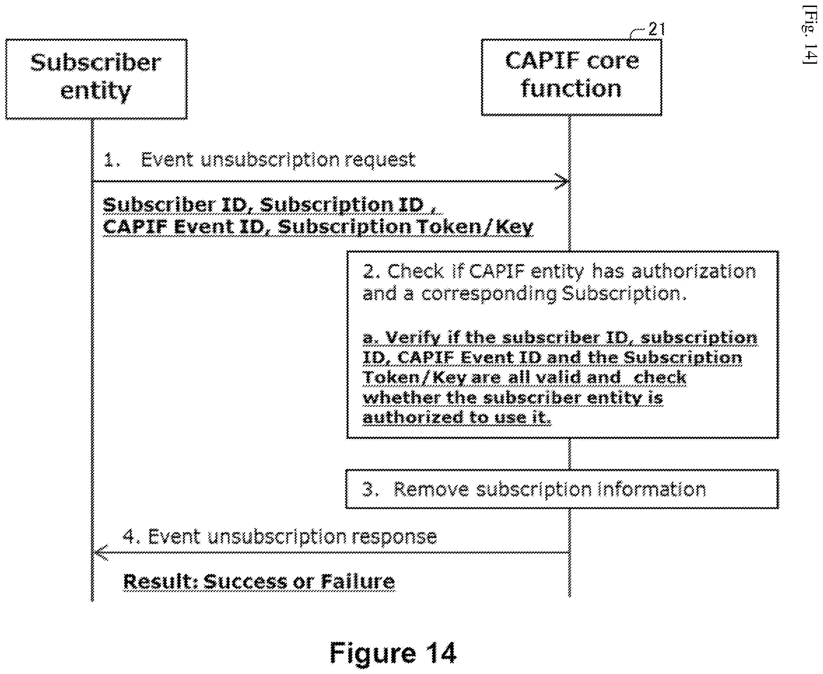

Figure 14 illustrates schematically an exemplary security procedure for CAPIF event unsubscription.

### Security Procedure:

1. The subscribing entity sends an event unsubscription request to the CAPIF core function 21 with Subscriber ID / Subscriber entity ID, Subscription Information such as Subscription ID, subscriber CAPIF Event ID, and Subscription Token/Key received during the successful subscription procedure as described in section 2.10.
2. Upon receiving the event unsubscription request from the subscribing entity, the CAPIF core function 21 checks for the event subscription corresponding to the subscribing entity by verifying the subscriber ID, subscription information, and further checks if the subscribing entity is authorized to unsubscribe from the CAPIF event by verifying the Subscription Token/Key and CAPIF Event ID.
3. If all the verification is successful and if the event subscription information corresponding to the subscribing entity is available and the subscribing entity is authorized to unsubscribe for the CAPIF event, the CAPIF core function 21 removes the subscription information.
4. The CAPIF core function 21 sends an event unsubscription response indicating successful or failure operation accordingly.

### 2.12 Security procedure for API invoker authorization to access service APIs

Description in this section corresponds to the procedure described in TS 23.222 [2] subclause 8.16.

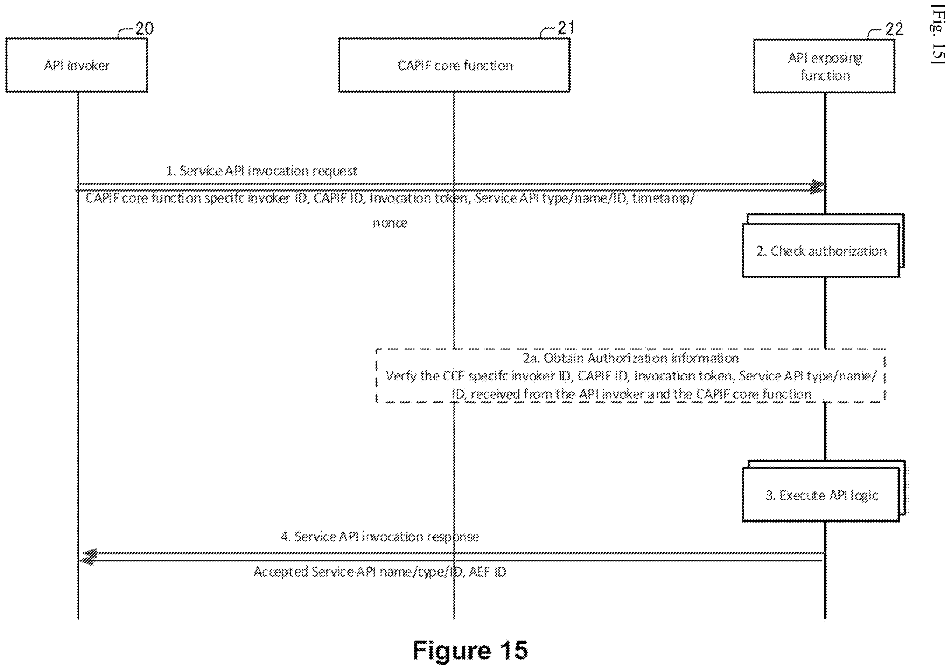

Figure 15 illustrates schematically an exemplary procedure for API invoker authorization to access service APIs.
1. The API invoker 20 triggers service API invocation request to the AEF 22, including the CAPIF core function specific API invoker ID, CAPIF ID, invocation token/invocation token* and the requested service API (type/name/ID) to be invoked. The invocation token* shall be derived as described in section 2.8. As the API invoker 20 can trigger several service API invocations asynchronously, the service API invocation request shall also contain a nonce or time stamp parameter to prevent reply and flooding attack.
2. Upon receiving the service API invocation request, the AEF 22 retrieve the API invoker service API authorization information from the CAPIF core function (CCF) 21. The CCF 21 shall provide the AEF 22 with API invoker's authorization information such as checks whether API invoker is authorized to invoke that service API, based on the information such as CAPIF core function specific API invoker ID, CAPIF ID, invocation token/invocation token* and the applicable service API (type/name/ID) that can be invoked. The authorization token acts as the authorization information. For every new service API invocation request, an invocation token* is derived from the previously used invocation token/invocation token*, service API ID and its corresponding invocation count.
   Invocation Token Generation at the CCF 21: The Invocation token is used as authorization information for an API invoker to access the service API and it is generated based on the keys derived after the successful authentication between the API invoker 20 and CCF 21 or between the AP invoker and the AEF 22 (example. Using AEF_{PSK}), the CAPIF ID, AEF ID, CCF specific API invoker ID, Onboard token and the invocation count.
2a. If the AEF 22 does not have information required to authorize service API invocation, the AEF 22 obtains the authorization information such as an invocation token/invocation token*, the CAPIF ID, AEF ID, CCF specific API invoker ID, Onboard token and the invocation count.
3. The AEF 22 verifies the authorization information and if it is successful executes the service logic for the invoked service API.
4. API invoker receives the service API invocation response as a result of the service API invocation.

### 2.13 API invoker authentication

In TS 33.122, clause 5.2.2.3 Method 3 - Token Based authorization, post successful access token grant request verification by CAPIF core function 21, it shall generate an Access Token for API invoker 20 using the Onboard Token and any key shared during the successful CAPIF-1e authentication previously.

### Summary

Beneficially, the above described exemplary embodiments include, although they are not limited to, one or more of the following details of functionalities that are not addressed by the current 3GPP specifications in [2] and [3]:
1) CAPIF specific API Invoker ID provided by any CAPIF or CAPIF Core Function (CCF) 21 for an API invoker 20 after a successful onboarding is bounded to the API invoker 20 and the specific CAPIF/CCF issuing the CAPIF API Invoker ID. This prevents the re-use of CAPIF API invoker ID with other CAPIF/CCF to which an API invoker 20 is not onboarded. This ID can otherwise termed as CCF specific API invoker ID.
2) CAPIF ID is used to uniquely identify a CAPIF core function 21 in a CAPIF Framework. The CAPIF ID is or is not bound/specific to the deployment scenarios such as centralized, distributed, and cascading. But the CAPIF ID is specific to the CAPIF core function 21 as a logical entity.
3) Trust Zone level indication/indicator indicates a zone where the API invoker 20 resides or the API invoker's Access point or radio or access network element through which it connects to the network. The CCF 21 decides the trust level of the API invoker's residing zone based on the Zone ID/APN/access network information it received from the API invoker 20 or the trust level information it maintains with various network zone it can support communication and services. Every CCF 21 maintains a specific trust level for every network/location/zone it can support service/communication.
4) API invoker's Trust level related indicator is a different from parameter specified in point 3. This trust level indicator parameter is specific to the behavior of any API invoker 20 with the CCF 21/CAPIF network/ AEF 22 and its service APIs. This parameter is assigned by the CCF 21/AEF 22 based on the past behavior of API invoker 20.
5) Zone ID and its trust level related indicator: Mobile network operators subdivide their networks into trust zones. Each trust zone has a unique Zone ID. Any network entity that communicates with another entity that reside in a particular zone has a trust level assigned for that Zone ID based on their policies or service level history. A specific zone's Zone ID and its trusted level differ or does not differ across its relation with other different network.
6) Onboarding Lifetime is limited to a time period during which the API invoker 20 can be trusted to act genuine throughout its lifetime. More over the current system discuss about offboarding and so the onboarding optionally may not be a one-time registration process for the entire lifetime of the API invoker 20. Onboarding Lifetime is bounded to the subscription, API invoker type and trust level of the API invoker 20 are also based on the CAPIF policy in a network.
7) Onboard Token: A secret authorization value or token assigned or generated by the CCF 21 and sent to/received by the API invoker 20 after a successful onboarding with a CCF 21, that binds the onboarding to all subsequent procedures that happen between an APF invoker, the CCF 21 and AEF 22. It is valid throughout the onboarding lifetime.
8) Authorization Token: A one-time/prolonged usage secret authorization value received by the API invoker 20 after a successful onboarding with a CCF 21. It is used between API invoker 20, CCF 21 or AEF 22 for authorization.
   a. Variant: A one-time / prolonged usage secret authorization value received by any subscribing entity from a CCF 21 after a successful registration to perform operations such as subscription to some events, discovery of service APIs. The subscribing entity can be API invoker 20, API exposing function 22, API publishing function 23 or API management function 24. The Authorization Token can be derived from the Onboard token and other parameters described in the section 2.1 of the present document.
9) CAPIF initiated API Offboarding is proposed to prevent any unexpected malicious activities found or monitored with an API invoker 20. The specification in [2] has only an API invoker 20 initiated offboarding process which does not have mechanisms to control malicious API invokers.
10) Publish token is bounded to a secret, API provider, APF 23, CCF 21, service API related information and the publish code used between the authenticated APF 23 and CCF 21 in CAPIF to prevent malicious API publishers from publishing malicious service.
   a. The publish token is used by the APF 23 as an authorization information to trigger the unPublish service API request.
   b. The publish token is used by the APF 23 as an authorization information to trigger the update service API request.
   c. The publish token is used by the APF 23 as an authorization information to trigger the retrieve service API request.
11) Publish period is a time period assigned to publish a requested service API. This supports efficient resource utilization at the CCF 21 and better Service API management at the CAPIF. After the expiry of the publish period, the CCF 21 unPublish the service APIs previously published by any APF 23 in the CCF 21.
12) Discovery level of Service API and topology hiding is based on the trust level of the API invoker 20 and/or its current residing network zone or the trust level of APN through which the API invoker 20 is connected to the network.
13) AEF Auth Token is the derived by the CCF 21 using a secret (random), AEF ID, CAPIF API Invoker ID and any Service API related information and on a successful authentication/authorization CCF shares AEF Auth Token with API invoker 20 and AEF 22, which can be later shared by the AEF 22 to API invoker 20 to authorize itself/to perform mutual authentication during the service invocation. AEF Auth Token is static or dynamic.
14) Invocation Token/Access Token: Whenever an API invoker 20 attempts to request a service invocation to AEF 22, it sends the Invocation Token received from a CCF 21 following an authentication as such or it is used to derive the Invocation token* along with other parameters discussed such as key resulted in the authentication/authorization between API invoker 20 and CCF 21/ AEF 22, invocation counter value and service API related information.
   a. Invocation token*/Access Token* is used as the authorization proof by the API invoker 20 to perform authentication between the API invoker 20 and the AEF 22 upon the service API invocation. It is also used to ensure token freshness to prevent replay attack. Single time usage of Invocation token/access token to request the Service API invocation will increase the security level. It does not involve additional message exchanges as in the current state of art, where a refresh token based access token request/response procedure needs extra round trip of messages.
   b. Variant: The refresh token is used by the API invoker 20 to get a new authorization proof from the CCF 21 or AEF 22 to be used in invocation token* generation.
   c. Variant: The CCF 21 or AEF 22 provided refresh token is used as authorization refresh notification token and it is provided back by the API invoker 20 to the CCF 21 or AEF 22 along with the invocation token*.
   d. Variant: Instead of using invocation token* as the authorization proof, invocation key* or invocation secret* is used by the API invoker 20 to perform authentication between the API invoker 20 and the AEF 22 upon the service API invocation.
15) Security level Indicator: The security level indicator notified by the APF 23 to the CCF 21 contains any information related to the security (function/cryptographic algorithm/access level and operation permissions/minimum security required/invoker type/trust level of the API invoker 20/trust level of the API residing zone) of the published service APIs and the required conditions to access it.
16) CAPIF Event ID: Any CAPIF event management by a CCF 21 such as Availability of service APIs, Service API updated, Monitoring service API invocations, API invoker onboarded, System related events, Performance related events have a unique CAPIF Event Identifier (CAPIF Event ID). The CAPIF Event ID is used by the Subscriber entity or the API invoker 20 or the CCF 21 to uniquely identify the CAPIF events.
17) Subscription Token/Key: Subscription Token/Key is generated and used as an authentication or authorization information by the Subscriber entity to request for subscription and unsubscription of events at the CCF 21. Subscription Token/Key corresponding to a Subscriber entity requesting subscription of events are generated by the CCF 21 to verify the authorization of the subscriber entity to request the subscription of events. The Subscription Token/Key is derived using any combination of the one or more of the following parameters such as, Onboard token provided by the CCF 21 after a successful onboarding, Registration ID, Subscriber ID, Subscriber entity ID, CAPIF Event ID, CAPIF ID, subscription code/keyword, Service API type/Name/ID, any preshared Secret, any key/token derived using initial authentication/authorization between API invoker 20/Subscriber entity and CCF 21.
   a. Subscription Token/Key is used as an authorization information by the subscribed entity to trigger unsubscription request regarding CAPIF events to the CCF 21.

It can be seen that in the above embodiments:
1) After a successful onboarding of an API invoker 20, the CCF 21 provides an Onboard token to the API invoker 20. This Onboard token is used in deriving any authentication or authorization information used for CAPIF security procedures.
2) Any of the authorization token used in the CAPIF procedure is bound to the authentication results, the identifiers of the communicating parties, a secret value, a counter and service API related information.
3) The onboarding result is bounded to all CAPIF security procedures executed between the API invoker 20 and CCF 21 (and other entities) through an onboarding token or authorization token derived from it.
4) The topology hiding and level of Service API discovery take the trust level of the requesting API invoker 20, or residing zone and/or its network into consideration.
5) The service API invocation token is refreshed without additional message exchanges.
6) There is a lifetime for Onboarding of an API invoker 20 to the CCF 21.
7) Publishing, unpublishing, updating and retrieval of Service API by an API publishing function 23/ API provider are authorized by the CCF/CAPIF using a publish token provided to the APF 23 by the CCF/CAPIF.
8) Request for subscription of CAPIF events is checked by the CCF 21 by verifying the authentication or authorization information such as authorization token /Key provided by subscriber entity. The authorization token is provided to the subscribing entity during its registration with the CCF 21.
9) The subscription token is issued to the subscribing entity by the CCF 21 after a successful subscription procedure. This subscription token is used by the subscribing entity to unsubscribe the subscription from the CCF 21 or CAPIF.

### Benefits

The proposed exemplary embodiments provide a number of benefits, including:
The current system does not have a sufficient security procedure to deal with CAPIF security issues
The access token refreshment in the current state of art requires additional message exchanges.

### System overview

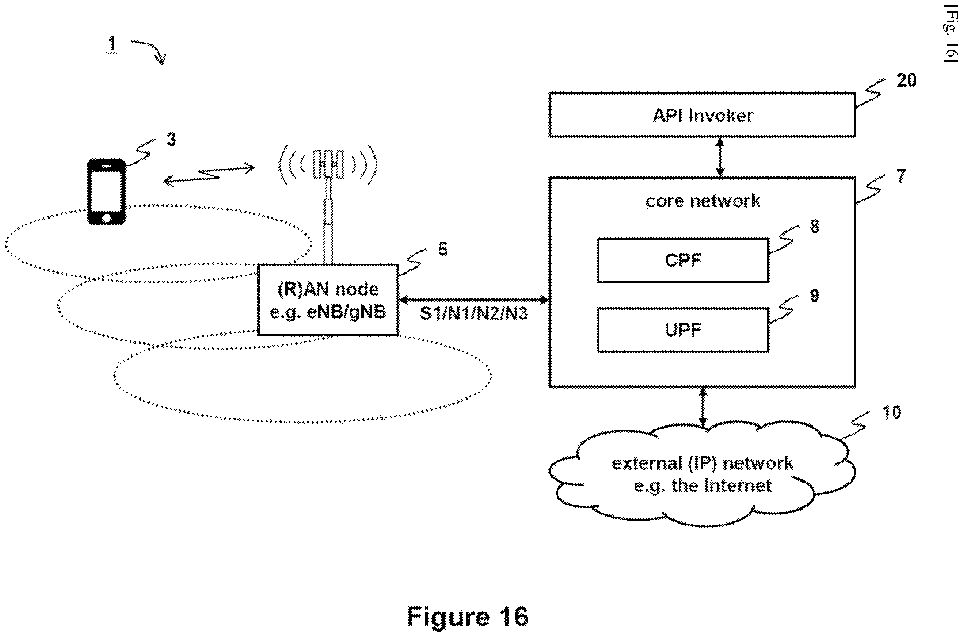

Figure 16 schematically illustrates a mobile (cellular or wireless) telecommunication system 1 to which the above embodiments are applicable.

In this network, users of mobile devices 3 (UEs) can communicate with each other and other users via respective base stations 5 and a core network 7 using an appropriate 3GPP radio access technology (RAT), for example, an E-UTRA and/or 5G RAT. It will be appreciated that a number of base stations 5 form a (radio) access network or (R)AN. As those skilled in the art will appreciate, whilst one mobile device 3 and one base station 5 are shown in Figure 16 for illustration purposes, the system, when implemented, will typically include other base stations and mobile devices (UEs).

Each base station 5 controls one or more associated cells (either directly or via other nodes such as home base stations, relays, remote radio heads, and/or the like). A base station 5 that supports E-UTRA/4G protocols may be referred to as an 'eNB' and a base station 5 that supports NextGeneration/5G protocols may be referred to as a 'gNBs'. It will be appreciated that some base stations 5 may be configured to support both 4G and 5G, and/or any other 3GPP or non-3GPP communication protocols.

The mobile device 3 and its serving base station 5 are connected via an appropriate air interface (for example the so-called 'Uu' interface and/or the like). Neighboring base stations 5 are connected to each other via an appropriate base station to base station interface (such as the so-called 'X2' interface, 'Xn' interface and/or the like). The base station 5 is also connected to the core network nodes via an appropriate interface (such as the so-called `S1', 'Nl', 'N2', 'N3' interface, and/or the like).

The core network 7 typically includes logical nodes (or 'functions') for supporting communication in the telecommunication system 1. Typically, for example, the core network 7 of a `Next Generation' / 5G system will include, amongst other functions, control plane functions (CPFs) 8 and user plane functions (UPFs) 9. From the core network 7, connection to an external IP network 10 (such as the Internet) is also provided (e.g. via one or more gateways).

The CAPIF is hosted within the operator network. Accordingly, the nodes of the system 1 are configured to provide CAPIF functionality, where appropriate. For example, one or more nodes (e.g. one or more CPFs 8) may be configured to operate as a CAPIF core function 21, an API exposing function 22, an API management function 24, an API publishing function 23, a Token Derivation Function (TDF), a subscriber entity, and/or the like.

An API invoker 20 is typically provided by a 3rd party application provider who has service agreement with the operator. The API invoker 20 may reside within the same trust domain as the operator network or outside the trust domain of the operator network.

### User equipment (UE)

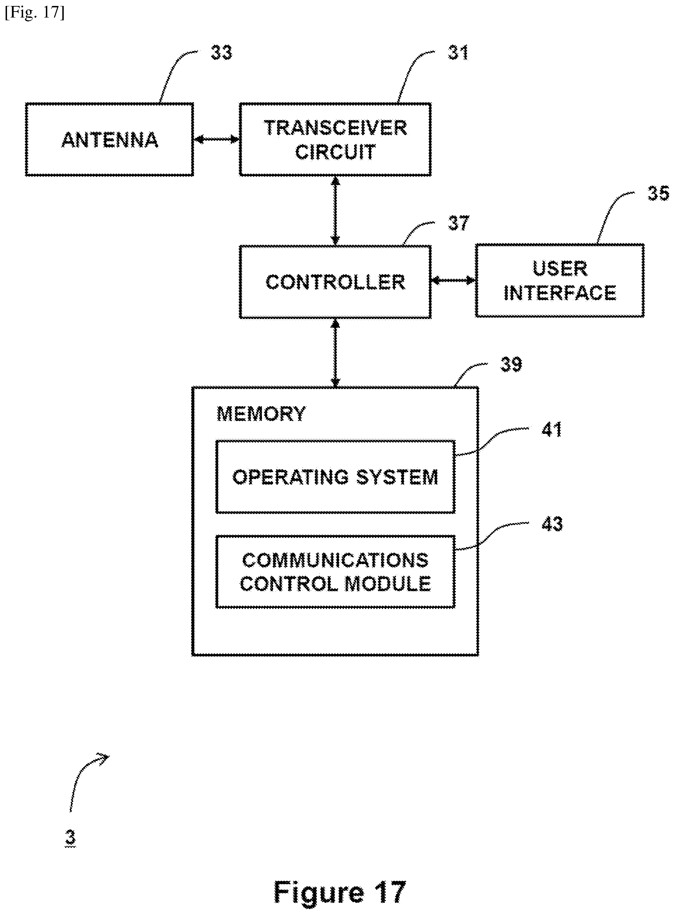

Figure 17 is a block diagram illustrating the main components of the UE (mobile device 3) shown in Figure 16. As shown, the UE includes a transceiver circuit 31 which is operable to transmit signals to and to receive signals from the connected node(s) via one or more antenna 33. Although not necessarily shown in Figure 17, the UE will of course have all the usual functionality of a conventional mobile device (such as a user interface 35) and this may be provided by any one or any combination of hardware, software and firmware, as appropriate. A controller 37 controls the operation of the UE in accordance with software stored in a memory 39. The software may be pre-installed in the memory 39 and/or may be downloaded via the telecommunication network 1 or from a removable data storage device (RMD), for example. The software includes, among other things, an operating system 41 and a communications control module 43. The communications control module 43 is responsible for handling (generating/sending/receiving) signaling messages and uplink/downlink data packets between the UE 3 and other nodes, including (R)AN nodes 5 and core network nodes.

### (R)AN node

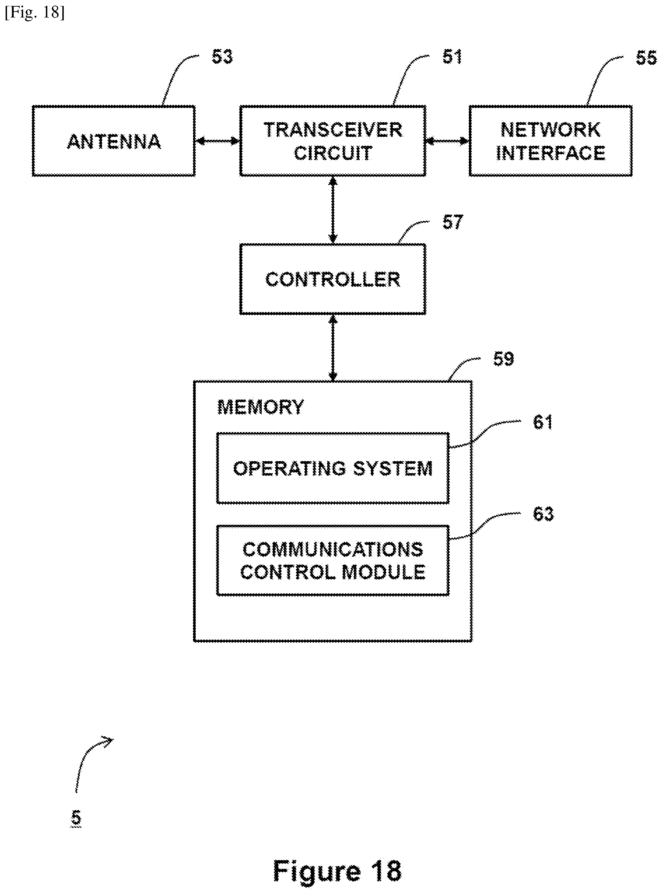

Figure 18 is a block diagram illustrating the main components of an exemplary (R)AN node 5 (base station) shown in Figure 16. As shown, the (R)AN node 5 includes a transceiver circuit 51 which is operable to transmit signals to and to receive signals from connected UE(s) 3 via one or more antenna 53 and to transmit signals to and to receive signals from other network nodes (either directly or indirectly) via a network interface 55. The network interface 55 typically includes an appropriate base station - base station interface (such as X2/Xn) and an appropriate base station - core network interface (such as S1/N1/N2/N3). A controller 57 controls the operation of the (R)AN node 5 in accordance with software stored in a memory 59. The software may be pre-installed in the memory 59 and/or may be downloaded via the telecommunication network 1 or from a removable data storage device (RMD), for example. The software includes, among other things, an operating system 61 and a communications control module 63. The communications control module 63 is responsible for handling (generating/sending/receiving) signaling between the (R)AN node 5 and other nodes, such as the UE 3 and the core network nodes. The communications control module 63 is also responsible for carrying out API related security procedures.

### Core network node

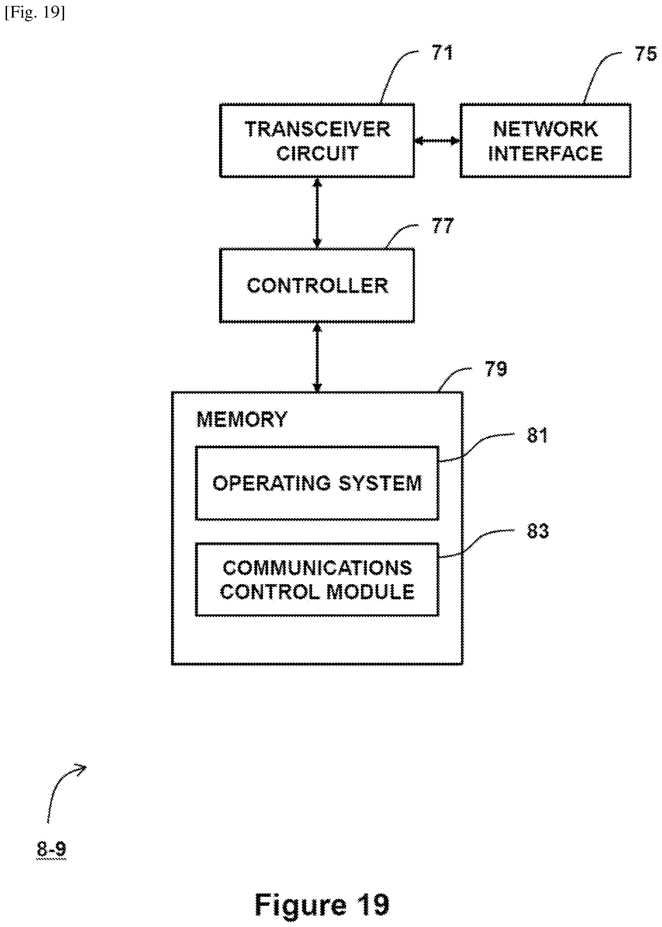

Figure 19 is a block diagram illustrating the main components of a generic core network node (or function), for example, the CPF 8 or the UPF 9 shown in Figure 16 (or the API Invoker 20). As shown, the core network node includes a transceiver circuit 71 which is operable to transmit signals to and to receive signals from other nodes (including the UE 3 and the (R)AN node 5) via a network interface 75. A controller 77 controls the operation of the core network node in accordance with software stored in a memory 79. The software may be pre-installed in the memory 79 and/or may be downloaded via the telecommunication network 1 or from a removable data storage device (RMD), for example. The software includes, among other things, an operating system 81 and a communications control module 83. The communications control module 83 is responsible for handling (generating/sending/ receiving) signaling between the core network node and other nodes, such as the UE 3, (R)AN node 5, and other core network nodes. Such signaling includes appropriately formatted requests and responses relating to API related security procedures.

### Modifications and Alternatives

Detailed embodiments have been described above. As those skilled in the art will appreciate, a number of modifications and alternatives can be made to the above embodiments whilst still benefiting from the inventions embodied therein. By way of illustration only a number of these alternatives and modifications will now be described.

In the above description, the UE, the (R)AN node, and the core network node (including the API Invoker) are described for ease of understanding as having a number of discrete modules (such as the communication control modules). Whilst these modules may be provided in this way for certain applications, for example where an existing system has been modified to implement the invention, in other applications, for example in systems designed with the inventive features in mind from the outset, these modules may be built into the overall operating system or code and so these modules may not be discernible as discrete entities. These modules may also be implemented in software, hardware, firmware or a mix of these.

Each controller may comprise any suitable form of processing circuitry including (but not limited to), for example: one or more hardware implemented computer processors; microprocessors; central processing units (CPUs); arithmetic logic units (ALUs); input/output (IO) circuits; internal memories / caches (program and/or data); processing registers; communication buses (e.g. control, data and/or address buses); direct memory access (DMA) functions; hardware or software implemented counters, pointers and/or timers; and/or the like.

In the above embodiments, a number of software modules were described. As those skilled in the art will appreciate, the software modules may be provided in compiled or un-compiled form and may be supplied to the UE, the (R)AN node, and the core network node as a signal over a computer network, or on a recording medium. Further, the functionality performed by part or all of this software may be performed using one or more dedicated hardware circuits. However, the use of software modules is preferred as it facilitates the updating of the UE, the (R)AN node, and the core network node in order to update their functionalities.

The above embodiments are also applicable to `non-mobile' or generally stationary user equipment.

Various other modifications will be apparent to those skilled in the art and will not be described in further detail here.

The program described in the above example aspects is stored in a storage device or recorded on a computer-readable recording medium. For example, the recording medium is a portable medium such as a flexible disk, an optical disk, a magnetooptical disk, and a semiconductor memory.

Although the present disclosure has been described above with reference to the example aspects, the present disclosure is not limited to the above-described example aspects. The configurations and details of the present disclosure can be changed in various manners that can be understood those skilled in the art within the scope of the present disclosure.

This application is based upon and claims the benefit of priority from Indian patent application No. 201811013212, filed on April 6th, 2018.

### List of References

[1] 3GPP TR 23.722 V1.0.0 (2017-09), Study on Common API Framework for 3GPP Northbound APIs (Release 15).
[2] 3GPP TS 23.222 V15.0.0 (2018-01), Common API Framework for 3GPP Northbound APIs; Stage 2 (Release 15).
[3] 3GPP TS 33.122 V0.1.0 (2018-01) Security Aspects of Common API Framework for 3GPP Northbound APIs. (available as S3-180401)
[4] RFC 6749: OAuth 2.0 Authorization Framework.
[5] RFC 6750: OAuth 2.0 Authorization Framework Bearer Token Usage.
[6] 3GPP S6-171534, "Issues of functionalities in the CAPIF TS 23.222", Nov 2017, NEC
[7] 3GPP S6-171538, "Pseudo-CR on missing functionalities in CAPIF - offboarding", Nov 2017, NEC

### Abbreviations and Terminology

3GPP 3rd Generation Partnership Project
5G 5th Generation
AEF API Exposing Function
AMF API Management Function
APF API Publishing Function
API Application Programming Interface
CAPIF Common API Framework
CCF CAPIF Core Function
DoS Denial of Service
LTE Long Term Evolution
NEF Network Exposure Function
PLMN Public Land Mobile Network
TDF Token Derivation Function
SA2 3GPP SAWG2
SA3 3GPP SA WG 3
SA6 3GPP SA WG 6
SCEF Service Capability Exposing Function
SDO Standard Developing Organization
SLA Service Level Agreement
TR Technical Report
TS Technical Specification
WI Work Item

## Claims

1. A device that acts as an Application Programming Interface, API, invoker (20) comprising:
a processor configured to perform authentication with a node that operates as a common API framework, CAPIF, core function (21);
a transmitter configured to send an Onboard API invoker request message to the node after the authentication; and
a receiver configured to receive an Onboard API invoker response message from the node, the Onboard API invoker response message including a CAPIF core function assigned API invoker Identifier, ID.

2. The device according to claim 1, wherein the Onboard API invoker response message includes Onboard Secret information remaining the same during onboarding lifetime.

3. The device according to claim 2, wherein:
the device is configured to send a second request message to the node for obtaining permission to access a service API after the receipt of the Onboard API invoker response message; and
the device is configured to receive a second response message from the node, the second response message including an access token specific to the device.

4. The device according to claim 3, wherein the second request message includes the CAPIF core function assigned API invoker ID and the Onboard Secret information.

5. The device according to any one of claims 1 to 4, wherein:
the device is configured to send an offboard API invoker request message to the node after the receipt of the Onboard API invoker response message, the offboard API invoker request message including the CAPIF core function assigned API invoker ID; and
the device is configured to receive an offboard API invoker response message from the node in response to successful verification of the CAPIF core function assigned API invoker ID, the offboard API invoker response message indicating successful offboarding of the device.

6. A node that operates as a common API framework, CAPIF, core function (21) comprising:
a processor configured to perform authentication with a device that acts as an Application Programming Interface, API, invoker (20);
a receiver configured to receive an Onboard API invoker request message from the device after the authentication; and
a transmitter configured to send an Onboard API invoker response message to the device in response to the Onboard API invoker request message, the Onboard API invoker response message including a CAPIF core function assigned API invoker Identifier, ID.

7. The node according to claim 6, wherein the Onboard API invoker response message includes Onboard Secret information remaining the same during onboarding lifetime.

8. The node according to claim 7,
wherein the node is configured to:
receive a second request message from a device that acts as an API invoker (20) for obtaining permission to access a service API after the sending of the Onboard API invoker response message;
generate an access token specific to the device; and
send a second response message to the device, the second response message including the access token.

9. The node according to claim 8, wherein the second request message includes the CAPIF core function assigned API invoker ID and the Onboard Secret information.

10. The node according to any one of claims 6 to 9,
wherein the node is configured to:
receive an offboard API invoker request message from the device after the sending of the Onboard API invoker response message, the offboard API invoker request message including the CAPIF core function assigned API invoker ID, and
verify the CAPIF core function assigned API invoker ID;
cancel enrollment of the device; and
delete authorization information of the device, and
wherein the node is configured to send an offboard API invoker response message to the device in response to successful verification of the CAPIF core function assigned API invoker ID, the offboard API invoker response message indicating successful offboarding.

11. An information processing method in a device that acts as an Application Programming Interface, API, invoker (20), comprising:
performing authentication with a node that operates as a common API framework, CAPIF, core function (21)
sending an Onboard API invoker request message to the node after the authentication; and
receiving an Onboard API invoker response message from the node, the Onboard API invoker response message including a CAPIF core function assigned API invoker Identifier, ID.

12. The information processing method according to claim 11, wherein the Onboard API invoker response message includes Onboard Secret information remaining the same during onboarding lifetime.

13. The information processing method according to claim 12, comprising:
sending a second request message to the node for obtaining permission to access a service API after the receipt of the Onboard API invoker response message; and
receiving a second response message from the node, the second response message including an access token specific to the device.

14. The information processing method according to claim 13, wherein the second request message includes the CAPIF core function assigned API invoker ID and the Onboard Secret information.

15. The information processing method according to any one of claims 11 to 14, comprising:
sending an offboard API invoker request message to the node after the receipt of the Onboard API invoker response message, the offboard API invoker request message including the CAPIF core function assigned API invoker ID; and
receiving an offboard API invoker response message from the node in response to successful verification of the CAPIF core function assigned API invoker ID, the offboard API invoker response message indicating successful offboarding of the device.

16. An information processing method in a node that operates as a common API framework, CAPIF, core function (21), comprising:
performing authentication with a device that acts as an Application Programming Interface, API, invoker (20)
receiving an Onboard API invoker request message from the device after the authentication; and
sending an Onboard API invoker response message to the device in response to the Onboard API invoker request message, the Onboard API invoker response message including a CAPIF core function assigned API invoker Identifier, ID.

17. The information processing method according to claim 16, wherein the Onboard API invoker response message includes Onboard Secret information remaining the same during onboarding lifetime.

18. The information processing method according to claim 17, comprising:
receiving a second request message from a device that acts as an API invoker (20) for obtaining permission to access a service API after the sending of the Onboard API invoker response message;
generating an access token specific to the device; and
sending a second response message to the device, the second response message including the access token.

19. The information processing method according to claim 18, wherein the second request message includes the CAPIF core function assigned API invoker ID and the Onboard Secret information.

20. The information processing method according to any one of claims 16 to 19, comprising:
receiving an offboard API invoker request message from a device that acts as an API invoker (20) after the sending of the Onboard API invoker response message, the offboard API invoker request message including the CAPIF core function assigned API invoker ID;
verifying the CAPIF core function assigned API invoker ID;
canceling enrollment of the device;
deleting authorization information of the device; and
sending an offboard API invoker response message to the device in response to successful verification of the CAPIF core function assigned API invoker ID, the offboard API invoker response message indicating successful offboarding.

## Patentansprüche

1. Vorrichtung, die als ein Anwendungsprogrammierschnittstellen, API, -Aufrufer (20) fungiert und aufweist:
einen Prozessor, der so konfiguriert ist, dass er eine Authentifizierung mit einem Knoten durchführt, der als eine gemeinsame API-Rahmen, CAPIF, -Kernfunktion (21) arbeitet,
einen Sender, der so konfiguriert ist, dass er nach der Authentifizierung eine Onboard-API-Aufruferanforderungsnachricht an den Konten sendet, und
einen Empfänger, der so konfiguriert ist, dass er eine Onboard-API-Aufruferantwortnachricht von dem Knoten empfängt, wobei die Onboard-API-Aufruferantwortnachricht eine zugewiesene CAPIF-Kernfunktion-API-Aufruferkennung, ID, enthält.

2. Vorrichtung nach Anspruch 1, wobei die Onboard-API-Aufruferantwortnachricht Onboard-Secret-Informationen enthält, die während der Onboard-Lebensdauer gleichbleiben.

3. Vorrichtung nach Anspruch 2, wobei
die Vorrichtung so konfiguriert ist, dass sie eine zweite Anforderungsnachricht an den Knoten sendet, um die Erlaubnis zu erhalten, auf eine Service-API zuzugreifen, nachdem sie die Onboard-API-Aufruferantwortnachricht empfangen hat; und
die Vorrichtung so konfiguriert ist, dass sie eine zweite Antwortnachricht von dem Knoten empfängt, wobei die zweite Antwortnachricht ein für die Vorrichtung spezifischen Zugangstoken enthält.

4. Vorrichtung nach Anspruch 3, wobei die zweite Anforderungsnachricht die zugewiesene CAPIF-Kernfunktion-API-Aufrufer-ID und die Onboard-Secret-Informationen enthält.

5. Vorrichtung nach einem der Ansprüche 1 bis 4, wobei
die Vorrichtung so konfiguriert ist, dass sie nach dem Empfang der Onboard-API-Aufruferantwortnachricht eine Offboard-API-Aufruferanforderungsnachricht an den Knoten sendet, wobei die Offboard-API-Aufruferanforderungsnachricht die zugewiesene CAPIF-Kernfunktion-API-Aufrufer-ID enthält; und
die Vorrichtung so konfiguriert ist, dass sie eine Offboard-API-Aufruferantwortnachricht von dem Knoten als Reaktion auf die erfolgreiche Verifizierung der zugewiesenen CAPIF-Kernfunktion-API-Aufrufer-ID empfängt, wobei die Offboard-API-Aufruferantwortnachricht das erfolgreiche Offboarding der Vorrichtung anzeigt.

6. Knoten, der als eine gemeinsame API-Rahmen, CAPIF, -Kernfunktion (21) arbeitet und aufweist:
einen Prozessor, der so konfiguriert ist, dass er eine Authentifizierung mit einer Vorrichtung durchführt, die als ein Anwendungsprogrammierschnittstellen, API, -Aufrufer (20) fungiert,
einen Empfänger, der so konfiguriert ist, dass er nach der Authentifizierung eine Onboard-API-Aufruferanforderungsnachricht von der Vorrichtung empfängt, und
einen Sender, der so konfiguriert ist, dass er als Reaktion auf die Onboard-API-Aufruferanforderungsnachricht eine Onboard-API-Aufruferantwortnachricht an die Vorrichtung sendet, wobei die Onboard-API-Aufruferantwortnachricht eine zugewiesene CAPIF-Kernfunktion-API-Aufruferkennung, ID, enthält.

7. Knoten nach Anspruch 6, wobei die Onboard-API-Aufruferantwortnachricht Onboard-Secret-Informationen enthält, die während der Onboard-Lebensdauer gleichbleiben.

8. Knoten nach Anspruch 7,
wobei der Knoten konfiguriert ist,
eine zweite Anforderungsnachricht von einer Vorrichtung zu empfangen, die als ein API-Aufrufer (20) fungiert, um die Erlaubnis zu erhalten, auf eine Service-API zuzugreifen, nachdem er die Onboard-API-Aufruferantwortnachricht empfangen hat; und
ein für die Vorrichtung spezifischen Zugriffstoken zu erzeugen; und
eine zweite Antwortnachricht an die Vorrichtung zu senden, wobei die zweite Antwortnachricht den Zugangstoken enthält.

9. Knoten nach Anspruch 8, wobei die zweite Anforderungsnachricht die zugewiesene CAPIF-Kernfunktion-API-Aufrufer-ID und die Onboard-Secret-Informationen enthält.

10. Knoten nach einem der Ansprüche 6 bis 9,
wobei der Knoten konfiguriert ist,
nach dem Senden der Onboard-API-Aufruferantwortnachricht eine Offboard-API-Aufruferanforderungsnachricht von der Vorrichtung zu empfangen, wobei die Offboard-API-Aufruferanforderungsnachricht die zugewiesene CAPIF-Kernfunktion-API-Aufrufer-ID enthält; und
die zugewiesene CAPIF-Kernfunktion-API-Aufrufer-ID zu verifizieren;
die Registrierung der Vorrichtung abzubrechen; und
die Autorisierungsinformationen der Vorrichtung zu löschen, und
wobei der Knoten so konfiguriert ist, dass er eine Offboard-API-Aufruferantwortnachricht als Reaktion auf die erfolgreiche Verifizierung der zugewiesenen CAPIF-Kernfunktion-API-Aufrufer-ID an die Vorrichtung sendet, wobei die Offboard-API-Aufruferantwortnachricht das erfolgreiche Offboarding anzeigt.

11. Informationsverarbeitungsverfahren in einer Vorrichtung, die als ein Anwendungsprogrammierschnittstellen, API, -Aufrufer (20) fungiert, aufweisend:
Durchführen einer Authentifizierung mit einem Knoten, der als eine gemeinsame API-Rahmen, CAPIF, -Kernfunktion (21) arbeitet,
Senden einer Onboard-API-Aufruferanforderungsnachricht an den Konten nach der Authentifizierung, und
Empfangen einer Onboard-API-Aufruferantwortnachricht von dem Knoten, wobei die Onboard-API-Aufruferantwortnachricht eine zugewiesene CAPIF-Kernfunktion-API-Aufruferkennung, ID, enthält.

12. Informationsverarbeitungsverfahren nach Anspruch 11, wobei die Onboard-API-Aufruferantwortnachricht Onboard-Secret-Informationen enthält, die während der Onboard-Lebensdauer gleichbleiben.

13. Informationsverarbeitungsverfahren nach Anspruch 12, das aufweist:
Senden einer zweiten Anforderungsnachricht an den Knoten, um die Erlaubnis zu erhalten, auf eine Service-API zuzugreifen, nachdem die Onboard-API-Aufruferantwortnachricht empfangen wurde; und
Empfangen einer zweiten Antwortnachricht von dem Knoten, wobei die zweite Antwortnachricht ein für die Vorrichtung spezifischen Zugangstoken enthält.

14. Informationsverarbeitungsverfahren nach Anspruch 13, wobei die zweite Anforderungsnachricht die zugewiesene CAPIF-Kernfunktion-API-Aufrufer-ID und die Onboard-Secret-Informationen enthält.

15. Informationsverarbeitungsverfahren nach einem der Ansprüche 11 bis 14, das aufweist:
Senden einer Offboard-API-Aufruferanforderungsnachricht an den Knoten nach dem Empfang der Onboard-API-Aufruferantwortnachricht, wobei die Offboard-API-Aufruferanforderungsnachricht die zugewiesene CAPIF-Kernfunktion-API-Aufrufer-ID enthält; und
Empfangen einer Offboard-API-Aufruferantwortnachricht von dem Knoten als Reaktion auf die erfolgreiche Verifizierung der zugewiesenen CAPIF-Kernfunktion-API-Aufrufer-ID, wobei die Offboard-API-Aufruferantwortnachricht das erfolgreiche Offboarding der Vorrichtung anzeigt.

16. Informationsverarbeitungsverfahren in einem Knoten, der als eine gemeinsame API-Rahmen, CAPIF, -Kernfunktion (21) arbeitet, aufweisend:
Durchführen einer Authentifizierung mit einer Vorrichtung, die als ein Anwendungsprogrammierschnittstellen, API, -Aufrufer (20) fungiert,
Empfangen einer Onboard-API-Aufruferanforderungsnachricht von der Vorrichtung nach der Authentifizierung, und
Senden einer Onboard-API-Aufruferantwortnachricht an die Vorrichtung als Reaktion auf die Onboard-API-Aufruferanforderungsnachricht, wobei die Onboard-API-Aufruferantwortnachricht eine zugewiesene CAPIF-Kernfunktion-API-Aufruferkennung, ID, enthält.

17. Informationsverarbeitungsverfahren nach Anspruch 16, wobei die Onboard-API-Aufruferantwortnachricht Onboard-Secret-Informationen enthält, die während der Onboard-Lebensdauer gleichbleiben.

18. Informationsverarbeitungsverfahren nach Anspruch 17, das aufweist:
Empfangen einer zweiten Anforderungsnachricht von einer Vorrichtung, die als ein API-Aufrufer (20) fungiert, um die Erlaubnis zu erhalten, auf eine Service-API zuzugreifen, nachdem die Onboard-API-Aufruferantwortnachricht gesendet wurde;
Erzeugen eines für die Vorrichtung spezifischen Zugriffstokens; und
Senden einer zweiten Antwortnachricht an die Vorrichtung, wobei die zweite Antwortnachricht den Zugangstoken enthält.

19. Informationsverarbeitungsverfahren nach Anspruch 18, wobei die zweite Anforderungsnachricht die zugewiesene CAPIF-Kernfunktion-API-Aufrufer-ID und die Onboard-Secret-Informationen enthält.

20. Informationsverarbeitungsverfahren nach einem der Ansprüche 16 bis 19, das aufweist:
Empfangen einer Offboard-API-Aufruferanforderungsnachricht von einer Vorrichtung, die als ein API-Aufrufer (20) fungiert, nach dem Senden der Onboard-API-Aufruferantwortnachricht, wobei die Offboard-API-Aufruferanforderungsnachricht die zugewiesene CAPIF-Kernfunktion-API-Aufrufer-ID enthält; und
Verifizieren der zugewiesenen CAPIF-Kernfunktion-API-Aufrufer-ID;
Abbrechen der Registrierung der Vorrichtung;
Löschen der Autorisierungsinformationen der Vorrichtung; und
Senden einer Offboard-API-Aufruferantwortnachricht an die Vorrichtung als Reaktion auf die erfolgreiche Verifizierung der zugewiesenen CAPIF-Kernfunktion-API-Aufrufer-ID, wobei die Offboard-API-Aufruferantwortnachricht das erfolgreiche Offboarding anzeigt.

## Revendications

1. Dispositif servant de dispositif d'appel d'interface de programmation d'application, API, (20) comprenant :
un processeur configuré pour réaliser une authentification avec un noeud qui fonctionne comme fonction centrale de framework d'API commune, CAPIF, (21) ;
un émetteur configuré pour envoyer un message de demande d'ajout de dispositif d'appel d'API au noeud après l'authentification ; et
un récepteur configuré pour recevoir un message de réponse d'ajout de dispositif d'appel d'API depuis le noeud, le message de réponse d'ajout de dispositif d'appel d'API comportant un identifiant, ID, de dispositif d'appel d'API attribué par la fonction centrale CAPIF.

2. Dispositif selon la revendication 1, dans lequel le message de réponse d'ajout de dispositif d'appel d'API comporte des informations secrètes d'ajout qui restent identiques pendant une durée de vie d'ajout.

3. Dispositif selon la revendication 2, dans lequel :
le dispositif est configuré pour envoyer un deuxième message de demande au noeud pour obtenir une permission d'accès à une API de service après la réception du message de réponse d'ajout de dispositif d'appel d'API ; et
le dispositif est configuré pour recevoir un deuxième message de réponse depuis le noeud, le deuxième message de réponse comportant un jeton d'accès spécifique au dispositif.

4. Dispositif selon la revendication 3, dans lequel le deuxième message de demande comporte l'ID de dispositif d'appel d'API attribué par la fonction centrale CAPIF et les informations secrètes d'ajout.

5. Dispositif selon l'une quelconque des revendications 1 à 4, dans lequel :
le dispositif est configuré pour envoyer un message de demande de suppression de dispositif d'appel d'API au noeud après la réception du message de réponse d'ajout de dispositif d'appel d'API, le message de demande de suppression de dispositif d'appel d'API comportant l'ID de dispositif d'appel d'API attribué par la fonction centrale CAPIF ; et
le dispositif est configuré pour recevoir un message de réponse de suppression de dispositif d'appel d'API depuis le noeud en réponse à une vérification réussie de l'ID de dispositif d'appel d'API attribué par la fonction centrale CAPIF, le message de réponse de suppression de dispositif d'appel d'API indiquant une suppression réussie du dispositif.

6. Noeud qui fonctionne comme fonction centrale de framework d'API commune, CAPIF, (21) comprenant :
un processeur configuré pour réaliser une authentification avec un dispositif servant de dispositif d'appel d'interface de programmation d'application, API, (20) ;
un récepteur configuré pour recevoir un message de demande d'ajout de dispositif d'appel d'API depuis le dispositif après l'authentification ; et
un émetteur configuré pour envoyer un message de réponse d'ajout de dispositif d'appel d'API au dispositif en réponse au message de demande d'ajout de dispositif d'appel d'API, le message de réponse d'ajout de dispositif d'appel d'API comportant un identifiant, ID, de dispositif d'appel d'API attribué par la fonction centrale CAPIF.

7. Noeud selon la revendication 6, dans lequel le message de réponse d'ajout de dispositif d'appel d'API comporte des informations secrètes d'ajout qui restent identiques pendant une durée de vie d'ajout.

8. Noeud selon la revendication 7,
dans lequel le noeud est configuré pour :
recevoir un deuxième message de demande depuis un dispositif servant de dispositif d'appel d'API (20) pour obtenir une permission d'accès à une API de service après l'envoi du message de réponse d'ajout de dispositif d'appel d'API ;
générer un jeton d'accès spécifique au dispositif; et
envoyer un deuxième message de réponse au dispositif, le deuxième message de réponse comportant le jeton d'accès.

9. Noeud selon la revendication 8, dans lequel le deuxième message de demande comporte l'ID de dispositif d'appel d'API attribué par la fonction centrale CAPIF et les informations secrètes d'ajout.

10. Noeud selon l'une quelconque des revendications 6 à 9,
dans lequel le noeud est configuré pour :
recevoir un message de demande de suppression de dispositif d'appel d'API depuis le dispositif après l'envoi du message de réponse d'ajout de dispositif d'appel d'API, le message de demande de suppression de dispositif d'appel d'API comportant l'ID de dispositif d'appel d'API attribué par la fonction centrale CAPIF, et
vérifier l'ID de dispositif d'appel d'API attribué par la fonction centrale CAPIF ;
annuler l'enregistrement du dispositif; et
éliminer des informations d'autorisation du dispositif, et
dans lequel le noeud est configuré pour envoyer un message de réponse de suppression de dispositif d'appel d'API au dispositif en réponse à une vérification réussie de l'ID de dispositif d'appel d'API attribué par la fonction centrale CAPIF, le message de réponse de suppression de dispositif d'appel d'API indiquant une suppression réussie.

11. Procédé de traitement d'informations dans un dispositif servant de dispositif d'appel d'interface de programmation d'application, API, (20) comprenant :
la réalisation d'une authentification avec un noeud qui fonctionne comme fonction centrale de framework d'API commune, CAPIF, (21) ;
l'envoi d'un message de demande d'ajout de dispositif d'appel d'API au noeud après l'authentification ; et
la réception d'un message de réponse d'ajout de dispositif d'appel d'API depuis le noeud, le message de réponse d'ajout de dispositif d'appel d'API comportant un identifiant, ID, de dispositif d'appel d'API attribué par la fonction centrale CAPIF.

12. Procédé de traitement d'informations selon la revendication 11, dans lequel le message de réponse d'ajout de dispositif d'appel d'API comporte des informations secrètes d'ajout qui restent identiques pendant une durée de vie d'ajout.

13. Procédé de traitement d'informations selon la revendication 12, comprenant :
l'envoi d'un deuxième message de demande au noeud pour obtenir une permission d'accès à une API de service après la réception du message de réponse d'ajout de dispositif d'appel d'API ; et
la réception d'un deuxième message de réponse depuis le noeud, le deuxième message de réponse comportant un jeton d'accès spécifique au dispositif.

14. Procédé de traitement d'informations selon la revendication 13, dans lequel le deuxième message de demande comporte l'ID de dispositif d'appel d'API attribué par la fonction centrale CAPIF et les informations secrètes d'ajout.

15. Procédé de traitement d'informations selon l'une quelconque des revendications 11 à 14, comprenant :
l'envoi d'un message de demande de suppression de dispositif d'appel d'API au noeud après la réception du message de réponse d'ajout de dispositif d'appel d'API, le message de demande de suppression de dispositif d'appel d'API comportant l'ID de dispositif d'appel d'API attribué par la fonction centrale CAPIF ; et
la réception d'un message de réponse de suppression de dispositif d'appel d'API depuis le noeud en réponse à une vérification réussie de l'ID de dispositif d'appel d'API attribué par la fonction centrale CAPIF, le message de réponse de suppression de dispositif d'appel d'API indiquant une suppression réussie du dispositif.

16. Procédé de traitement d'informations dans un noeud qui fonctionne comme fonction centrale de framework d'API commune, CAPIF, (21) comprenant :
la réalisation d'une authentification avec un dispositif servant de dispositif d'appel d'interface de programmation d'application, API, (20) ;
la réception d'un message de demande d'ajout de dispositif d'appel d'API depuis le dispositif après l'authentification ; et
l'envoi d'un message de réponse d'ajout de dispositif d'appel d'API au dispositif en réponse au message de demande d'ajout de dispositif d'appel d'API, le message de réponse d'ajout de dispositif d'appel d'API comportant un identifiant, ID, de dispositif d'appel d'API attribué par la fonction centrale CAPIF.

17. Procédé de traitement d'informations selon la revendication 16, dans lequel le message de réponse d'ajout de dispositif d'appel d'API comporte des informations secrètes d'ajout qui restent identiques pendant une durée de vie d'ajout.

18. Procédé de traitement d'informations selon la revendication 17, comprenant :
la réception d'un deuxième message de demande depuis un dispositif servant de dispositif d'appel d'API (20) pour obtenir une permission d'accès à une API de service après l'envoi du message de réponse d'ajout de dispositif d'appel d'API ;
la génération d'un jeton d'accès spécifique au dispositif; et
l'envoi d'un deuxième message de réponse au dispositif, le deuxième message de réponse comportant le jeton d'accès.

19. Procédé de traitement d'informations selon la revendication 18, dans lequel le deuxième message de demande comporte l'ID de dispositif d'appel d'API attribué par la fonction centrale CAPIF et les informations secrètes d'ajout.

20. Procédé de traitement d'informations selon l'une quelconque des revendications 16 à 19, comprenant :
la réception d'un message de demande de suppression de dispositif d'appel d'API depuis un dispositif servant de dispositif d'appel d'API (20) après l'envoi du message de réponse d'ajout de dispositif d'appel d'API, le message de demande de suppression de dispositif d'appel d'API comportant l'ID de dispositif d'appel d'API attribué par la fonction centrale CAPIF ;
la vérification de l'ID de dispositif d'appel d'API attribué par la fonction centrale CAPIF ;
l'annulation de l'enregistrement du dispositif;
l'élimination d'informations d'autorisation du dispositif, et
l'envoi d'un message de réponse de suppression de dispositif d'appel d'API au dispositif en réponse à une vérification réussie de l'ID de dispositif d'appel d'API attribué par la fonction centrale CAPIF, le message de réponse de suppression de dispositif d'appel d'API indiquant une suppression réussie.
